# EUROPÄISCHE PATENTSCHRIFT

(11) **EP 3 077 998 B1**
(45) Veröffentlichungstag und Bekanntmachung des Hinweises auf die Patenterteilung: **24.04.2024**
(21) Anmeldenummer: 14811813.6
(22) Anmeldetag: 04.12.2014
(51) Int. Cl.: G07C 9/00, E05B 43/00, E05B 65/00

(54) **VERFAHREN ZUM DEAKTIVIEREN DES VERRIEGELNS ZUMINDEST EINER TÜR EINES GEHÄUSES**
METHOD FOR DEACTIVATING THE LOCKING OF AT LEAST ONE DOOR OF A HOUSING
PROCÉDÉ DE DÉSACTIVATION DU VERROUILLAGE D'AU MOINS UNE PORTE D'UN BOÎTIER

(30) Priorität: 05.12.2013 DE 102013113554; 11.04.2014 DE 102014105244
(43) Veröffentlichungstag der Anmeldung: 12.10.2016
(73) Patentinhaber: Deutsche Post AG, 53113 Bonn (DE)
(72) Erfinder: CARSTENS, Christian, 53578 Windhagen (DE); DAUTZ, Christoph, 53225 Bonn (DE); JANSEN, Jochen, 53113 Bonn (DE); BENZ, Ramin, 53229 Bonn (DE)
(74) Vertreter: Cohausz & Florack
(86) Internationale Anmeldenummer: PCT/EP2014/076587
(87) Internationale Veröffentlichungsnummer: WO 2015/082623

(56) Entgegenhaltungen:
- EP-A1- 0 708 423
- DE-A1- 10 329 969
- US-A- 3 797 006
- US-A1- 2005 174 237

## Beschreibung

### Gebiet

Beispielhafte Ausführungsformen der Erfindung betreffen ein Verfahren zum Deaktivieren des Verriegelns zumindest einer Tür eines Gehäuses.

### Hintergrund

Zugangskontrollsysteme finden in vielerlei Hinsicht Anwendung, beispielsweise zur Kontrolle des Zugangs von Personen zu Räumen eines Gebäudes, wie es beispielsweise bei Hotels, Bürokomplexen oder Laboren der Fall ist, zu Veranstaltungen oder auch in abstrakter Form zu Funktionen, Ressourcen oder Diensten, beispielsweise von Computerfunktionen oder -ressourcen oder Serverdiensten.

Eine spezifische Anwendung von Zugangskontrollsystemen bildet auch die Kontrolle des Zugangs von Personen zu Öffnungen von Behältern, wie z.B. Schließfächern oder Warenzustellungsbehältern, insbesondere von Paketkästen. Paketkästen ermöglichen eine neuartige Form der Zustellung/Abholung von Paketen für Personen, die Pakete auch in Abwesenheit an oder in der Nähe ihres Wohnsitzes empfangen oder versenden wollen. Dazu werden Paketkästen üblicherweise vor dem Wohnsitz des Paketkastennutzers - ähnlich einem Briefkasten, aber mit größerem Fassungsvolumen - installiert und Pakete dann vom Zusteller durch Einlegen in den Paketkasten zugestellt oder durch Herausnehmen aus dem Paketkasten abgeholt. Um Missbrauch und Diebstahl zu verhindern, muss der Paketkasten über ein Schloss verfügen, mit dem die Türen des Paketkastens verriegelt werden kann. Beispielsweise verfügt das Schloss über eine Fallenfunktion, so dass die Tür beim Schließen automatisch verriegelt wird.

Problematisch ist jedoch, dass die Paketkästen im Freien installiert sind und nicht ständig beaufsichtigt werden, so dass die Gefahr bestehen könnte, dass sich beispielsweise spielende Kinder in den Paketkästen versehentlich einschließen.

Aus US 2005/174237 A1 ist ein Türzustandssensor für einen Safe mit einer Tür bekannt, der eine kontinuierliche Überwachung des Zustands des Safes und der Tür ermöglicht. Der Sensor ist beispielsweise Teil eines Verriegelungssystems. Wenn erfasst wird, dass die Tür länger als eine erlaubte Öffnungszeit geöffnet ist, aktiviert das System beispielsweise einen Alarm.

DE 103 29 969 A1 beschreibt ein elektronisches Schloss, das batteriegestützt arbeitet, wobei eine in dem Schloss vorhandene Zugangskontrollschaltung normalerweise in einem Schlafmodus ist, in der sie keinen Strom verbraucht. Die Zugangskontrollschaltung wird jeweils nur bedarfsweise mittels einer aktiviert, d. h. für eine gewisse Zeit in einen Aktivstatus überführt. Das Einschalten der Zugangskontrollschaltung erfolgt durch einen Tastendruck auf den äußeren Bedienknopf. Es ergibt sich eine einfache intuitive Bedienung.

### Zusammenfassung einiger beispielhafter Ausführungsformen der Erfindung

Die vorliegende Erfindung hat sich daher unter anderem die Aufgabe gestellt, diese Probleme zu überwinden. Diese Aufgabe wird durch den Gegenstand der unabhängigen Ansprüche gelöst. Vorteilhafte Ausführungsformen können den abhängigen Ansprüchen entnommen werden.

Gemäß der Erfindung wird ein Verfahren zum Deaktivieren des Verriegelns zumindest einer Tür einer Aufnahmevorrichtung offenbart, wobei die Aufnahmevorrichtung Verrieglungsmittel umfassen, die eingerichtet sind, die zumindest eine Tür zu verriegeln, wobei die Verriegelungsmittel eine Falle umfassen, die eingerichtet ist, die zumindest eine Tür beim Schließen automatisch zu verriegeln, wobei das

Verfahren Folgendes umfasst: das Bewirken des Entriegelns der zumindest einen Tür der Aufnahmevorrichtung, das Erfassen des Öffnens der zumindest einen Tür,das Messen der Zeit seit zumindest ein von einer Zugangskontrollvorrichtung der Aufnahmevorrichtung erfasstes Ereignis stattgefunden hat, wobei das zumindest eine von der Zugangskontrollvorrichtung erfasste Ereignis ein mit einer Benutzeraktivität assoziiertes Ereignis ist, wobei das zumindest eine von der Zugangskontrollvorrichtung erfasste Ereignis das Detektieren einer Präsenz einer Zugangsberechtigungsnachweisvorrichtung in der Umgebung der Zugangskontrollvorrichtung, das Erhalten einer Zugangsberechtigungsinformation von einer Zugangsberechtigungsnachweisvorrichtung und/oder von einem Benutzer, das Aufnehmen einer Eingabe des Benutzers, das Bewirken des Entriegelns der Tür und/oder das Öffnen der Tür ist, und das Bewirken, wenn die zumindest eine Tür geöffnet ist und die gemessene Zeit einen vorgegebenen Zeitschwellwert überschreitet, des Deaktivierens des Verriegelns der zumindest einen Tür derart, dass die zumindest eine Tür nicht verriegelbar ist.

Zum Beispiel wird das erfindungsgemäße Verfahren zumindest teilweise von einer Zugangskontrollvorrichtung und/oder von jeweiligen Mitteln der Zugangskontrollvorrichtung ausgeführt, beispielsweise einer Zugangskontrollvorrichtung der Aufnahmevorrichtung.

Gemäß der Erfindung wird eine Zugangskontrollvorrichtung offenbart, die folgendes umfasst: Mittel eingerichtet zur Ausführung und/oder Steuerung des erfindungsgemäßen Verfahrens oder jeweilige Mittel zur Ausführung und/oder Steuerung der Schritte des erfindungsgemäßen Verfahrens (z.B. aller Schritte, die nicht durch einen Benutzer ausgeführt werden). Zum Beispiel sind die Mittel der erfindungsgemäßen Zugangskontrollvorrichtung eingerichtet, das erfindungsgemäße Verfahren oder dessen Schritte auszuführen und/oder zu steuern (z.B. abgesehen von den Schritten, die durch einen Benutzer ausgeführt werden). Ein oder mehrere der Schritte des erfindungsgemäßen Verfahrens können auch durch die gleichen Mittel ausgeführt und/oder gesteuert werden. Beispielsweise können ein oder mehrere der Mittel der Zugangskontrollvorrichtung zumindest teilweise durch einen oder mehrere Prozessoren gebildet sein.

Zum Beispiel umfasst die erfindungsgemäße Vorrichtung zumindest einen Prozessor und zumindest einen Speicher, der Programmcode beinhaltet, wobei der Speicher und der Programmcode eingerichtet sind, die Vorrichtung mit dem zumindest einen Prozessor dazu zu veranlassen, zumindest das erfindungsgemäße Verfahren auszuführen und/oder zu steuern. Dabei können entweder alle Schritte des erfindungsgemäßen Verfahrens gesteuert werden, oder alle Schritte des erfindungsgemäßen Verfahrens ausgeführt werden, oder ein oder mehrere Schritte gesteuert und ein oder mehrere Schritte ausgeführt werden.

Zum Beispiel ist die erfindungsgemäße Zugangskontrollvorrichtung eine Zugangskontrollvorrichtung für eine Aufnahmevorrichtung.

Gemäß der Erfindung wird des Weiteren eine Aufnahmevorrichtung offenbart, die folgendes umfasst: ein Gehäuse, zumindest eine Tür zum Verschließen zumindest einer Gehäuseöffnung, Verriegelungsmittel, die eingerichtet ist, die zumindest eine Tür zu verriegeln und zu entriegeln, wobei die Verriegelungsmittel eine Falle umfassen, die eingerichtet ist, die zumindest eine Tür beim Schließen automatisch zu verriegeln und die erfindungsgemäße Zugangskontrollvorrichtung.

Gemäß der Erfindung wird ein System offenbart, das folgendes umfasst: die erfindungsgemäße Aufnahmevorrichtung und eine Zugangsberechtigungsnachweisvorrichtung.

Gemäß der Erfindung wird des Weiteren ein Computerprogramm offenbart, das folgendes umfasst: Programmanweisungen, die einen Prozessor zur Ausführung und/oder Steuerung des erfindungsgemäßen Verfahrens veranlassen, wenn das Computerprogramm auf dem Prozessor läuft.

Unter einem Prozessor sollen beispielsweise Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des erfindungsgemäßen Verfahrens gesteuert werden, oder alle Schritte des erfindungsgemäßen Verfahrens ausgeführt werden, oder ein oder mehrere Schritte gesteuert und ein oder mehrere Schritte ausgeführt werden. Das erfindungsgemäße Computerprogramm kann beispielsweise über ein Netzwerk wie das Internet, ein Telefon- oder Mobilfunknetz und/oder ein lokales Netzwerk verteilbar sein. Das erfindungsgemäße Computerprogramm kann zumindest teilweise Software und/oder Firmware eines Prozessors sein. Es kann gleichermaßen zumindest teilweise als Hardware implementiert sein. Das erfindungsgemäße Computerprogramm kann beispielsweise auf einem computerlesbaren Speichermedium gespeichert sein, z.B. einem magnetischen, elektrischen, elektromagnetischen, optischen und/oder andersartigen Speichermedium. Das Speichermedium kann beispielsweise Teil des Prozessors sein, beispielsweise ein (nicht-flüchtiger oder flüchtiger) Programmspeicher und/oder Hauptspeicher des Prozessors oder ein Teil davon.

Gemäß der Erfindung wird des Weiteren eine Verwendung offenbart, die folgendes umfasst: Verwendung der erfindungsgemäßen Aufnahmevorrichtung dergestalt, das die zumindest eine Tür der Aufnahmevorrichtung geschlossen wird, um das Bewirken des Deaktivierens des Verriegelns der zumindest Tür derart, dass die zumindest eine Tür nicht verriegelbar ist, zu verhindern.

Gemäß der Erfindung wird des Weiteren ein Benutzerverfahren offenbart, das folgendes umfasst: das Schließen der zumindest einen Tür der erfindungsgemäßen Aufnahmevorrichtung.

Im Folgenden werden die Eigenschaften des erfindungsgemäßen Verfahrens, der erfindungsgemäßen Zugangskontrollvorrichtung, der erfindungsgemäßen Aufnahmevorrichtung, des erfindungsgemäßen Systems, des erfindungsgemäßen Computerprogramms, der erfindungsgemäßen Verwendung und des Benutzerverfahrens - teilweise beispielhaft - beschrieben.

Unter einer Zugangskontrollvorrichtung wie der erfindungsgemäßen Zugangskontrollvorrichtung soll beispielsweise eine Vorrichtung verstanden werden an der eine Zugangskontrolle durchgeführt, beispielsweise wird dort der Zugang zu Räumen von Gebäuden (z.B. Hotels, Bürokomplexe, Labore) oder Vorrichtungen (z.B. Aufnahmevorrichtungen), zu Veranstaltungen (z.B. Konzerte, Sportveranstaltungen), zu Funktionen (beispielsweise eines Computers, z.B. über ein Login), zu Ressourcen oder zu Diensten (beispielsweise zu einem von einem Server bereitgestellten Dienst, z.B. Online-Banking, Soziale Netz-werke, Emailkonten) kontrolliert. Beispiele des Zugangs zu Räumen von Vorrichtungen sind der Zugang zu Aufnahmeräumen von Aufnahmevorrichtungen, wie z.B. Schließfächern, Spinden, Kühlschränken, Warenzustellbehältern, Briefkästen, Paketkästen, die beispielsweise jeweils mit Türen verschlossen und durch Verriegelungsmittel gesichert sind. Ein Paketkasten kann beispielsweise zumindest ein Aufnahmefach für Pakete aufweisen. Ferner kann ein Paketkasten beispielsweise mit einem Briefschlitz und gegebenenfalls mit einem Aufnahmefach für Briefe versehen sein.

Die Zugangskontrolle kann beispielsweise darin bestehen, dass zumindest teilweise anhand von an der Zugangskontrollvorrichtung erhaltenen Zugangsberechtigungsinformation entschieden wird, ob Zugang gewährt werden darf. Wenn entschieden wird, dass Zugang gewährt werden darf, wird beispielsweise Zugang gewährt, beispielsweise durch Absetzen eines Steuersignals, beispielsweise an ein Verriegelungsmittel, um beispielsweise eine Tür zu einem oder mehreren Räumen (z.B. Aufnahmeräume einer Aufnahmevorrichtung) zu entriegeln und/oder zu öffnen, um den Zugang zu den ein oder mehreren Räumen zu ermöglichen.

Die Zugangsberechtigungsinformation kann an der Zugangskontrollvorrichtung beispielsweise durch entsprechende Eingaben eines Benutzers auf Eingabemitteln der Zugangskontrollvorrichtung erhalten werden. Die Eingabemittel sind beispielsweise eingerichtet, Eingaben eines Benutzers aufzunehmen. Ein Beispiel für solche Eingabemittel ist eine Tastatur, ein Mikrofon, ein Scanner, eine Kamera und/oder eine berührungsempfindliche Anzeige.

Alternativ oder zusätzlich kann die Zugangsberechtigungsinformation an der Zugangskontrollvorrichtung durch Empfangen der Zugangsberechtigungsinformation an Kommunikationsmitteln der Zugangskontrollvorrichtung erhalten werden. Die Kommunikationsmittel sind beispielsweise eingerichtet, drahtlos mit einer Zugangsberechtigungsnachweisvorrichtung eines Benutzers zu kommunizieren. Ein Beispiel für solche Kommunikationsmittel ist eine Kommunikationsschnittstelle, zum Beispiel eine Kommunikationsschnittstelle einer drahtlosen Kommunikationstechnik. Ein Beispiel für eine drahtlose Kommunikationstechnik ist Radio Frequency Identification (RFID) und/oder Near Field Communication (NFC) und/oder Bluetooth (z.B. Bluetooth Version 2.1 und/oder 4.0). RFID und NFC- sind beispielsweise gemäß den ISO-Standards 18000, 11784/11785 und dem ISO/IEC-Standard 14443-A und 15693 spezifiziert. Die Bluetooth-Spezifikationen sind unter www.bluetooth.org erhältlich.

Bei der Zugangsberechtigungsnachweisvorrichtung handelt es sich beispielsweise um ein tragbares elektronisches Gerät und/oder eine tragbare elektronische Einheit. Die Zugangsberechtigungsnachweisvorrichtung ist beispielsweise eingerichtet, mit den Kommunikationsmitteln der Zugangskontrollvorrichtung zu kommunizieren, beispielsweise eine Zugangsberechtigungsinformationen an die Kommunikationsmittel zu kommunizieren. Zum Beispiel kann die Zugangsberechtigungsnachweisvorrichtung entsprechende Kommunikationsmittel umfassen, beispielsweise einen analogen Schaltkreis zum Senden und Empfangen (auch als Sendeempfänger oder Transceiver bezeichnet), eine Schaltung (z.B. einen digitalen Schaltkreis und/oder einen Prozessor) und einen Speicher (beispielsweise ein EEPROM - Electrically Erasable Programmable Read-Only Memory). Ein Beispiel für eine Zugangsberechtigungsnachweisvorrichtung ist zum Beispiel ein Nutzergerät wie ein Mobiltelefon, ein Persönlicher Digitaler Assistent (PDA), ein Medienabspielgerät (z.B. ein iPod) und/oder ein Navigationsgerät. Ein weiteres Beispiel für eine Zugangsberechtigungsnachweisvorrichtung ist zum Beispiel ein Zustellergerät eines Zustellers eines Zustelldienstes wie ein Handscanner wie der Honeywell LXE Tecton MX7 (z.B. wenn die Zugangskontrollvorrichtung den Zugang zu einer Aufnahmevorrichtung wie einen Paketkasten kontrolliert). Ein weiteres Beispiel für eine Zugangsberechtigungsnachweisvorrichtung ist zum Beispiel ein "Tag" wie ein RFID- oder NFC-Tag wie der MiFARE-Familie von NXP.

Die Zugangskontrollvorrichtung kann beispielsweise ein oder mehrere Steuermittel umfassen, die eingerichtet sind, zu prüfen, ob Zugang gewährt werden darf. Zum Beispiel sind die Steuermittel eingerichtet, die Mittel der Zugangskontrollvorrichtung und/oder eine oder mehrere Verriegelungsmittel der zumindest einen Tür zumindest teilweise zu steuern und somit beispielsweise ein Entriegeln der zumindest einen Tür und/oder ein Verriegeln der zumindest einen Tür bewirken zu können. Ein Beispiel für solche Steuermittel sind ein oder mehrere Prozessoren.

Ein Beispiel für Verriegelungsmittel einer Tür ist ein elektronisch ansteuerbares Schloss und/oder eine elektronisch ansteuerbare Verriegelungseinheit. Zum Beispiel können die Steuermittel eingerichtet sein, ein solches Schloss zu steuern und somit beispielsweise ein Öffnen des Schlosses (d.h. ein Entriegeln der Tür) und/oder ein Schließen des Schlosses (d.h. ein Verriegeln der Tür) bewirken zu können. Es ist beispielsweise denkbar, dass die Zugangskontrollvorrichtung, die Verriegelungsmittel umfasst. Die Verriegelungsmittel können jedoch auch separat von der Zugangskontrollvorrichtung sein.

Unter dem Deaktivieren des Verriegelns der zumindest einen Tür soll beispielsweise verstanden werden, dass die Tür nicht verriegelbar ist (also von Innen und von Außen geöffnet werden kann, z.B. durch Drücken gegen die Tür oder Ziehen an der Tür geöffnet werden kann). Zum Beispiel wird das Verriegeln der zumindest einen Tür deaktiviert, wenn die Funktionen der oben beschriebenen Verriegelungsmittel zumindest teilweise derart deaktiviert und/oder blockiert wird, dass sie die Tür nicht verriegeln und/oder nicht in eine Fallenposition und/oder Schließposition gebracht werden können. Zum Beispiel wird ein Schließzylinder, ein Schließhaken und/oder ein Riegel des Schlosses mechanisch blockiert. Zum Beispiel wird ein elektrischer Antrieb des Schlosses zum Bewegen eines Schließzylinders, eines Schließhakens und/oder eines Riegels deaktiviert. Unter Deaktivieren des Verriegelns der zumindest einen Tür soll beispielsweise auch verstanden werden, dass ein Schließen der Tür (und somit auch ein Verriegeln der Tür) mechanisch blockiert wird. Zum Beispiel wird ein Schließzylinder, ein Schließhaken und/oder ein Riegel des Schlosses derart in eine Zu-Stellung bewegt, dass ein Schließen der Tür mechanisch blockiert wird. Es ist beispielsweise auch denkbar, dass ein an der Tür oder der Gehäuseöffnung angeordnetes Blockierelement derart in eine Blockierstellung bewegt wird, dass ein Schließen der Tür mechanisch blockiert wird. Zum Beispiel sind die Steuermittel der Zugangskontrollvorrichtung eingerichtet, das Deaktivieren des Verriegelns der zumindest einen Tür zu bewirken (z.B. durch entsprechende Steuersignale an die Verriegelungsmittel und/oder ein Blockierelement).

Unter einem von der Zugangskontrollvorrichtung erfassten Ereignis soll beispielsweise jedes Ereignis verstanden werden, das durch die Zugangskontrollvorrichtung erfassbar ist und auf die Anweseneinheit eines Benutzers in der Umgebung der Aufnahmevorrichtung schließen lässt. Zum Beispiel ist ein solches Ereignis ein mit einer Benutzeraktivität assoziiertes Ereignis. Wenn ein solches mit einer Benutzeraktivität assoziiertes Ereignis, das Messen der Zeit auslöst, ist die gemessene Zeit beispielsweise ein Maß für die seit der letzten Benutzeraktivität vergangene Zeit. Wenn das von der Zugangskontrollvorrichtung erfasste Ereignis ein mit einer Benutzeraktion assoziiertes Ereignis ist, ist die gemessene Zeit beispielsweise eine Benutzerinaktivitätszeit. Eine Benutzerinaktivitätszeit gibt beispielsweise die Zeit an, die seit dem letzten von der Zugangskontrollvorrichtung erfassten mit einer Benutzeraktion assoziierten Ereignis vergangen ist.

Zum Beispiel ist das zumindest eine von der Zugangskontrollvorrichtung erfasste Ereignis (z.B. ein mit einer Benutzeraktivität assoziiertes Ereignis) das Detektieren einer Präsenz einer Zugangsberechtigungsnachweisvorrichtung in der Umgebung der Zugangskontrollmittel, das Erhalten von Information wie einer Zugangsberechtigungsinformation von einer Zugangsberechtigungsnachweisvorrichtung und/oder von einem Benutzer, die Interaktion mit einem Benutzer wie das Aufnehmen einer Eingabe des Benutzers, das Bewirken des Entriegelns der Tür und/oder das Öffnen der Tür. Zum Beispiel umfasst die Zugangskontrollvorrichtung Erfassungsmittel, die eingerichtet sind, das zumindest eine Ereignis zu erfassen. Ein Beispiel für ein solches Erfassungsmittel ist ein Sensor wie ein Türöffnungssensor und/oder ein Eingabemittel und/oder ein Kommunikationsmittel.

Ein Türöffnungssensor ist beispielsweise ein Erfassungsmittel, das eingerichtet ist, ein Öffnen der zumindest einen Tür (z.B. ein Öffnen der Tür durch einen Benutzer) zu erfassen und/oder zu erfassen, dass die zumindest eine Tür geöffnet ist. Die zumindest eine Tür ist beispielsweise geöffnet, wenn sie offensteht (z.B. derart offensteht, dass ein von der Tür verschließbares Aufnahmefach der Aufnahmevorrichtung frei zugänglich ist).

Zum Beispiel umfasst die Zugangskontrollvorrichtung Zeitmessmittel zum Messen der Zeit (z.B. eine Timerschaltung und/oder eine Timerfunktion, beispielsweise eine Timerschaltung und/oder eine Timerfunktion der Steuermittel).

Der Zeitschwellwert ist beispielsweise derart gewählt oder vorgegeben, dass die Wahrscheinlichkeit, dass sich der Benutzer (z.B. der Nutzer/Zusteller) noch in der Nähe der Zugangskontrollvorrichtung befindet, der die Tür geöffnet hat, gering ist. Durch das Deaktivieren des Verriegelns der Tür zu diesem Zeitpunkt kann somit verhindert werden, dass die Tür unbeaufsichtigt und/oder unbeabsichtigt verriegelt wird (z.B. von spielenden Kindern). Zum Beispiel kann dadurch verhindert werden, dass sich spielende Kinder selbst oder andere darin einschließen. Als zusätzlichen Schutz ist es beispielsweise denkbar, die Erfindung mit einer Notentriegelungsfunktion zu kombinieren, die ein Entriegeln der Tür z.B. von einer durch die Tür verschlossenen Gehäuseöffnung (z.B. ein Aufnahmefach), jedoch nicht von außerhalb der Gehäuseöffnung (z.B. ein Aufnahmefach) ermöglicht.

Kurz vor dem Deaktivieren des Verriegelns kann es beispielsweise ein Warnsignal geben, z.B. ein akustisches und/oder optisches Warnsignal. Das Deaktivieren des Verriegelns der Tür ist beispielsweise mit einem erhöhten Energieverbrauch verbunden, beispielsweise weil eine Falle durch einen Antrieb dauerhaft in einer Offen-Stellung dauerhaft gehalten und/oder ein Blockierelement durch einen Antrieb in eine Blockierstellung bewegt werden muss, um das Verriegeln zu deaktivieren. Es ist deshalb vorteilhaft, das Deaktivierten des Verriegelns der Tür zu verhindern. Dies kann beispielsweise durch ein Schließen der Tür durch einen Benutzer (z.B. einen Zusteller) erreicht werden (z.B. im Rahmen der erfindungsgemäßen Verwendung und/oder des erfindungsgemäßen Benutzerverfahrens).

Weitere Vorteile der offenbarten Erfindung werden nachfolgend anhand beispielhafter Ausführungsformen beschrieben, deren Offenbarung für die jeweiligen Kategorien (Verfahren, Vorrichtung, System, Computerprogramm) gleichermaßen gelten soll.

Wie oben offenbart, umfasst die Aufnahmevorrichtung Verriegelungsmittel, die eingerichtet sind, die zumindest eine Tür zu verriegeln. Die Verriegelungsmittel umfassen eine Falle, die eingerichtet ist, die zumindest eine Tür beim Schließen automatisch zu verriegeln. Zum Beispiel kann das elektronisch ansteuerbare Schloss mit einer solchen Falle ausgestattet sein, so dass die Steuermittel beispielsweise nur ein Öffnen des Schlosses steuern müssen, während ein Verriegeln des Schlosses manuell durch einen Nutzer geschieht, indem dieser die Falle nutzt und beispielsweise durch Zudrücken der Tür ein automatisches Verriegeln des Schlosses durch die Falle bewirkt. Zum Beispiel wird die Falle beim Öffnen des Schlosses zumindest zeitweise in eine Offen-Stellung (z.B. eine Entriegelungsposition und/oder ein Freigabeposition) überführt, beispielsweise durch einen elektrischen Motor, und nach dem Öffnen der Tür wird die Falle in eine Zu-Stellung (z.B. eine Verriegelungsposition und/oder eine Schließposition) überführt, beispielsweise durch eine Federbelastung. Beim Zudrücken der Tür wird die Falle aus der Zu-Stellung in die Offen-Stellung verdrängt und nach dem Beenden des Zudrückens kehrt die Falle automatisch wieder in die Zu-Stellung zurück, beispielsweise durch eine Federvorbelastung der Falle, so dass die geschlossene Türe verriegelt ist. Beispielsweise hat ein Schnappverschluss eine solche Fallenfunktion. Das Verriegeln der zumindest einen Tür ist zum Beispiel deaktiviert, wenn die Falle gegen die Federbelastung in einer Offen-Stellung gehalten wird.

Wie oben beschrieben, können zum Beispiel die Steuermittel der Zugangskontrollvorrichtung ein Schloss der zumindest einen Tür steuern. Zum Beispiel können die Steuermittel das Schloss steuern, eine Falle des Schlosses in eine Offen-Stellung zu überführen, so dass die Falle die Tür beim Schließen nicht mehr automatisch verriegelt. Solange sich die Falle in der Offen-Stellung befindet, ist das Verriegeln der Tür somit beispielsweise deaktiviert. Eine andere Möglichkeit zum Deaktivieren des Verriegelns der Tür ist beispielsweise das Blockieren der Falle derart, dass die Falle aus der ZuStellung nicht in die Offen-Stellung überführt werden kann.

Wie oben offenbart, ist das zumindest eine von der Zugangskontrollvorrichtung erfasste Ereignis ein mit einer Benutzeraktivität assoziiertes Ereignis. Wie oben beschrieben, soll unter einem mit einer Benutzeraktivität assoziierten Ereignis beispielsweise jedes Ereignis verstanden werden, das durch einen Benutzer bewirkbar ist und/oder auf die Anweseneinheit eines Benutzers in der Umgebung der Aufnahmevorrichtung schließen lässt. Ein mit einer Benutzeraktivität assoziiertes Ereignis wird beispielsweise durch eine Benutzeraktivität ausgelöst und/oder ist eine Benutzeraktivität. Ein Beispiel für eine solche Benutzeraktivität ist zum Beispiel eine Präsenz eines Benutzer (z.B. eines Benutzers mit einer Zugangsberechtigungsnachweisvorrichtung) in der Umgebung der Zugangskontrollvorrichtung, das Erhalten von Information wie einer Zugangsberechtigungsinformation von einer Zugangsberechtigungsnachweisvorrichtung eines Benutzers und/oder von einem Benutzer, die Interaktion mit einem Benutzer wie das Aufnehmen einer Eingabe des Benutzers, das Öffnen der zumindest einen Tür und/oder das Schließen der zumindest einen Tür.

Gemäß einer beispielhaften Ausführungsform der Erfindung umfasst das Verfahren ferner das Erhalten von Zugangsberechtigungsinformation zum Gewähren eines Zugangs (z.B. wenn die zumindest eine Tür geschlossen und verriegelt ist), das Entscheiden, ob Zugang gewährt werden darf, zumindest teilweise in Abhängigkeit der erhaltenen Zugangsberechtigungsinformation, und das Bewirken des Entriegelns der zumindest einen Tür nur dann, wenn entschieden wurde, dass Zugang gewährt werden darf.

Wie oben beschrieben, wird die Zugangsberechtigungsinformation beispielsweise an der Zugangskontrollvorrichtung von einem Benutzer erhalten (z.B. einem Benutzer, der Zugang haben möchte). Zum Beispiel gibt der Benutzer die Zugangsberechtigungsinformation an der Zugangskontrollvorrichtung (z.B. an Eingabemitteln der Zugangskontrollvorrichtung) ein und/oder kommuniziert sie von einer Zugangsberechtigungsnachweisvorrichtung an die Zugangskontrollvorrichtung (z.B. an Kommunikationsmittel der Zugangskontrollvorrichtung). Die Zugangsberechtigungsinformation kann beispielsweise gemäß einer drahtlosen Kommunikationstechnik von der Zugangsberechtigungsnachweisvorrichtung an die Zugangskontrollvorrichtung kommuniziert werden, beispielsweise gemäß RFID, NFC oder Bluetooth. Das Erhalten von Zugangsberechtigungsinformation von einer Zugangsberechtigungsnachweisvorrichtung ist somit ein Ereignis, das von der Zugangskontrollvorrichtung erfassbar ist und das von einem Benutzer bewirkt wird. Das Erhalten von Zugangsberechtigungsinformation ist daher vorteilhaft, um das Messen der Zeit auszulösen.

Unter Entscheiden, ob Zugang gewährt werden darf, soll beispielsweise verstanden werden, dass geprüft wird, ob die erhaltene Zugangsberechtigungsinformation zum Zugang berechtigt (z.B. durch die Zugangskontrollvorrichtung). Zum Beispiel sind die Steuermittel der Zugangskontrollvorrichtung eingerichtet, zu prüfen, ob die erhaltene Zugangsberechtigungsinformation zum Zugang berechtigt.

Die Zugangsberechtigungsinformation ist beispielsweise als Information zu verstehen, die im Rahmen einer durch die Zugangskontrollvorrichtung durchgeführten Prüfung, ob einer Entität Zugang gewährt werden darf, ausgewertet wird. Die Prüfung der Zugangsberechtigungsinformation muss nicht die einzige Prüfung im Rahmen der Zugangskontrolle sein, es können beispielsweise weitere notwendige Bedingungen erforderlich sein, damit Zugang gewährt werden darf. Beispiele für Zugangsberechtigungsinformation sind beispielsweise ein Code oder Schlüssel, der an die Zugangskontrollvorrichtung kommuniziert wird und mit einem in der Zugangskontrollvorrichtung hinterlegten Code oder Schlüssel verglichen wird, um bei Übereinstimmung zu entscheiden, dass Zugang gewährt werden darf. Der Code oder Schlüssel kann gegen Ausspähung zusätzlich gesichert sein, beispielsweise durch Verschlüsselung. Der Code oder Schlüssel kann beispielsweise dauerhaft verwendet werden, oder kann in regelmäßigen oder unregelmäßigen Abständen geändert werden. Beispielsweise kann nach einer vordefinierten Vorschrift nach zeitlichen Vorgaben (z.B. jeden Tag) oder bei jeder Benutzung eines Codes ein neuer Code erzeugt werden. Dies kann sowohl in der Zugangskontrollvorrichtung als auch in der Zugangsberechtigungsnachweisvorrichtung erfolgen, damit beide jeweils korrespondierende Paare von Codes oder Schlüssel aufweisen, oder in der Zugangskontrollvorrichtung und in einer Einheit, von der die Zugangsberechtigungsnachweisvorrichtung den Code oder Schlüssel erhält.

Eine alternative beispielhafte Form von Zugangsberechtigungsinformation ist beispielsweise in der EP 1 024 239 A1 beschrieben, in der die Zugangsberechtigungsinformation als Zugangstoken tᵢⱼ ausgebildet ist, der Zugangsrechte aᵢⱼ definiert, beispielsweise in der Form: "Gewähre Nutzer uᵢ Zugang zu Schloss lⱼ bis 1/2/2001". Die Zugangsrechte werden dann an ein Schloss übertragen und gegengeprüft. Es wird also beispielsweise geprüft, ob es sich um den Nutzer uᵢ handelt, der den Zugangstoken vorlegt, ob der Zugangstoken für das Schloss lⱼ gilt und ob der Gültigkeitszeitraum "bis 1/2/2001" des Schlosses noch nicht abgelaufen ist. Zusätzlich können die Zugangsrechte aᵢⱼ mit einem Nachrichtenauthentisierungscode (Message Authentication Code, MAC) versehen werden, beispielsweise ein HMAC nach Request for Comments (RFC) Dokument 2104. Der MAC basiert auf einem Schlüssel sⱼ, der sowohl an einer Einheit, die den Zugangstoken erzeugt, als auch im Schloss bekannt ist. Der Zugangstoken tᵢⱼ umfasst dann den HMAC und die Zugangsrechte aᵢⱼ, beispielsweise konkateniert. Das Schloss kann dann anhand des empfangenen MACs, der empfangenen Zugangsrechte aᵢⱼ und des Schlüssels sⱼ die Authentizität des Zugangstokens bestätigen und dann die Zugangsrechte aᵢⱼ prüfen. Alternativ können die Zugangsrechte gemäß der EP 1 024 239 A1 auch wie folgt definiert werden: "Gewähre dem Nutzer, der k kennt, Zugang zu Schloss lⱼ bis 1/1/2001". Der Nutzer muss dann sowohl über den Zugangstoken tᵢⱼ als auch über das Wissen über k (ein Schlüssel) verfügen, um Zugang am Schloss lⱼ zu erhalten, und bekommt beides (beispielsweise in verschlüsselter Form) von einer Einheit, die den Token erzeugt, zur Verfügung gestellt.

Zugang wird beispielsweise gewährt, indem das Entriegeln der zumindest einen Tür der Aufnahmevorrichtung (z.B. eines Paketkastens) bewirkt wird (z.B. durch die Zugangskontrollvorrichtung). Wie oben beschrieben, können die Steuermittel eingerichtet sein, das Schloss zu steuern und somit beispielsweise ein Öffnen des Schlosses (d.h. ein Entriegeln der Tür) und/oder ein Schließen des Schlosses (d.h. ein Verriegeln der Tür) bewirken zu können.

Das Bewirken des Entriegelns der zumindest einen Tür ist somit ein Ereignis, das von der Zugangskontrollvorrichtung erfassbar ist und das von einem Benutzer (z.B. durch das Kommunizieren der Zugangsberechtigungsinformation) bewirkt wird. Das Erhalten von Zugangsberechtigungsinformation ist daher ein mit einer Benutzeraktion assoziiertes Ereignis und vorteilhaft, um das Messen der Zeit auszulösen.

Gemäß einer beispielhaften Ausführungsform der Erfindung umfasst das Verfahren ferner das Detektieren einer Präsenz einer Zugangsberechtigungsnachweisvorrichtung in einer Umgebung der Zugangskontrollvorrichtung (z.B. durch die Zugangskontrollvorrichtung) .

Unter Detektieren einer Präsenz einer Zugangsberechtigungsnachweisvorrichtung in einer Umgebung der Zugangskontrollvorrichtung soll beispielsweise verstanden werden, dass die Zugangskontrollvorrichtung feststellt, dass sich eine Zugangsberechtigungsnachweisvorrichtung zumindest mit einer hohen Wahrscheinlichkeit in der Umgebung der Zugangskontrollvorrichtung befindet.

Das Detektieren durch die Zugangskontrollvorrichtung (z.B. die Kommunikationsmittel) soll vorzugsweise ohne eine Kommunikation zwischen der Zugangskontrollvorrichtung und der Zugangsberechtigungsnachweisvorrichtung erfolgen. Zum Beispiel wird durch die Präsenz der Zugangsberechtigungsnachweisvorrichtung in der Umgebung der Zugangskontrollvorrichtung zumindest eine durch die Zugangskontrollvorrichtung erfassbare physikalische Größe verändert. Zum Beispiel ist die physikalische Größe in dem Zustand, in dem die Zugangsberechtigungsnachweisvorrichtung in der Umgebung der Zugangskontrollvorrichtung präsent ist, gegenüber dem Zustand, in dem die Zugangsberechtigungsnachweisvorrichtung in der Umgebung der Zugangskontrollvorrichtung nicht präsent ist, verändert. Zum Beispiel wird die physikalische Größe alleine durch das Einbringen der Zugangsberechtigungsnachweisvorrichtung in die Umgebung der Zugangskontrollvorrichtung verändert. Wenn eine Veränderung dieser physikalischen Größe festgestellt wird, besteht somit eine zumindest hohe Wahrscheinlichkeit dafür, dass sich eine Zugangsberechtigungsnachweisvorrichtung (und ein Benutzer, dem die Zugangsberechtigungsnachweisvorrichtung gehört) in der Umgebung der Zugangskontrollvorrichtung befindet.

Ein Beispiel für eine solche physikalische Größe ist beispielsweise eine Stromstärke eines Stroms einer Antenne der Kommunikationsmittel der Zugangskontrollvorrichtung beim Senden eines Signals und/oder beim Erzeugen eines elektrischen, magnetischen und/oder elektromagnetischen Felds. Zum Beispiel wird ein Widerstand der Antenne verändert, wenn ein Gegenstand (z.B. mit ferromagnetischen Eigenschaften, z.B. mit einer relativen Permeabilität größer als 1) in die Umgebung der Zugangskontrollvorrichtung gebracht wird. Zum Beispiel wird beim Detektieren stets ein Signal mit gleicher Leistung gesendet, so dass sich der Strom der Antenne beim Senden des Signals verändert, wenn sich der Widerstand der Antenne ändert. Zum Beispiel ist der Strom der Antennenstrom beim Senden des Signals. Zum Beispiel ist der Strom der Treiberstrom beim Senden des Signals (z.B. der Treiberstrom einer Treiberschaltung für die Antennen). Zum Beispiel ist das Signal ein Burst-Signal. Es ist beispielsweise auch denkbar, dass statt der Stromstärke des Stroms der Antenne die Spannung und/oder der Widerstand der Antenne beim Senden gemessen werden.

Unter einer Antenne soll beispielsweise jedes Bauelement verstanden, das geeignet ist, ein elektrisches Signal, ein magnetisches Signal und/oder ein elektromagnetisches Signal an die Umgebung abzugeben (z.B. abzustrahlen). Ein Bauelement zum Abstrahlen/Abgeben eines magnetischen Signals ist beispielsweise eine magnetische Antenne wie eine Leiterschleife (z.B. eine planare Leiterschleife) und/oder eine Spule (z.B. eine planare Spule). Ein Bauelement zum Abstrahlen/Abgeben eines elektromagnetischen Signals ist beispielsweise eine Patch-Antenne und/oder eine lineare Antenne wie eine Dipolantenne. Insbesondere soll auch ein Bauelement zum Erzeugen und/oder Abgeben eines NFC-Signals wie eine NFC-Antenne und/oder eine NFC-Spule als Antenne verstanden werden.

Die Umgebung der Zugangskontrollvorrichtung, in der eine Präsenz einer Zugangsberechtigungsnachweisvorrichtung durch die Zugangskontrollvorrichtung detektierbar ist, kann beispielsweise durch die Abnahme der Leistung eines von den Kommunikationsmitteln gesendete Signals begrenzt sein. Zum Beispiel ist die Umgebung der Zugangskontrollvorrichtung auf einen Raumbereich mit weniger als 5 m, vorzugsweise weniger als 1 m, besonders vorzugsweise weniger als 0.5 m Abstand zu der Zugangskontrollvorrichtung (z.B. zu einer Antenne der Kommunikationsmittel) beschränkt.

Wenn auf diese Art und Weise eine Präsenz einer Zugangsberechtigungsnachweisvorrichtung detektiert wird, besteht somit zumindest eine hohe Wahrscheinlichkeit dafür, dass sich tatsächlich ein Benutzer in der Umgebung der Zugangskontrollvorrichtung befindet. Das Detektieren einer Präsenz einer Zugangsberechtigungsnachweisvorrichtung in einer Umgebung der Zugangskontrollvorrichtung ist ein mit einer Benutzeraktion assoziiertes Ereignis und daher vorteilhaft, um das Messen der Zeit auszulösen.

Wie oben offenbart, umfasst das Verfahren ferner das Erfassen des Öffnens der zumindest einen Tür (z.B. durch die Zugangskontrollvorrichtung). Wie oben beschrieben, umfasst die Zugangskontrollvorrichtung zum Beispiel einen Türöffnungssensor zum Erfassen des Öffnens der Tür. Das Öffnen der Tür erfolgt normalerweise auch durch einen Benutzer, so dass es ein mit einer Benutzeraktion assoziiertes Ereignis ist und daher vorteilhaft ist, um das Messen der Zeit auszulösen.

Gemäß einer beispielhaften Ausführungsform der Erfindung umfasst das Verfahren ferner das Erfassen des Ereignisses und das Starten des Messens der Zeit.

Gemäß einer beispielhaften Ausführungsform der Erfindung umfasst das Verfahren ferner das Beenden des Messens der Zeit, wenn zumindest ein von der Zugangskontrollvorrichtung erfasstes neues Ereignis stattgefunden hat, und das Messen der Zeit seit das zumindest eine von der Zugangskontrollvorrichtung erfasste neue Ereignis stattgefunden hat. Dabei kann ein neues Ereignis jedes der oben beschriebenen Ereignisse sein, insbesondere ein mit einer Benutzeraktivität assoziiertes Ereignis. Zum Beispiel wird jedes Mal eine neue Zeitmessung begonnen, wenn die Zugangskontrollvorrichtung ein neues Ereignis (z.B. ein neues mit einer Benutzeraktion assoziiertes Ereignis) erfasst. Zum Beispiel wird eine erste Messung der Zeit seit einem ersten Ereignis beendet, wenn nach dem ersten Ereignis ein neues (also ein späteres zweites) Ereignis stattfindet und von der Zugangskontrollvorrichtung erfasst wird. Stattdessen wird nun beispielsweise die Zeit seit dem neuen Ereignis gemessen. Dies ist beispielsweise vorteilhaft, um sicherzustellen, dass die gemessene Zeit stets die Zeit seit dem letzten von der Zugangskontrollvorrichtung erfassten Ereignis repräsentiert (z.B. die Zeit seit dem letzten mit einer Benutzeraktion assoziierten Ereignis).

Gemäß einer beispielhaften Ausführungsform der Erfindung ist der Zeitschwellwert kleiner als oder gleich 60 Minuten, vorzugsweise kleiner als oder gleich 15 Minuten, besonders vorzugsweise kleiner als oder gleich 5 Minuten (z.B. ist der Zeitschwellwert kleiner als oder gleich 2 Minuten). Zum Beispiel ist der Zeitschwellwert ein Benutzerinaktivitätszeitschwellwert für eine Benutzerinaktivitätszeit. Wenn die Benutzerinaktivitätszeit den Zeitschwellwert überschreitet, wird beispielsweise das Deaktivieren des Verriegelns der Tür bewirkt.

Gemäß einer beispielhaften Ausführungsform der Erfindung umfasst das Verfahren ferner das Messen (z.B. durch die Zugangskontrollvorrichtung) der Entriegelungszeit seit dem Bewirken des Entriegelns der zumindest einen Tür, und das Bewirken, wenn die zumindest eine Tür seit dem Bewirken des Entriegelns nicht geöffnet wurde und die gemessene Entriegelungszeit einen vorgegebenen Entriegelungszeitschwellwert überschreitet, des Verriegelns der zumindest einen Tür (z.B. durch die Zugangskontrollvorrichtung) .

Der Entriegelungszeitschwellwert ist beispielsweise derart gewählt, dass mit keinem Öffnen der entriegelten Tür zu rechnen ist. Der Entriegelungszeitschwellwert ist beispielsweise kleiner als 60 Minuten, vorzugsweise kleiner als 15 Minuten, besonders vorzugsweise kleiner als 5 Minuten (z.B. ist der Entriegelungszeitschwellwert kleiner als oder gleich 2 Minuten).

Dies ist beispielsweise vorteilhaft, um einem ungewollten Entriegeln entgegenzuwirken und/oder in einer Aufnahmevorrichtung befindliche Gegenstände zu schützen.

Zum Beispiel umfasst das Verfahren ferner das Bewirken des Wechselns der Zugangskontrollvorrichtung in einen Energiesparmodus, wenn die gemessene Entriegelungszeit den Entriegelungzeitschwellwert überschreitet.

Es ist auch denkbar, dass für das Wechseln der Zugangskontrollvorrichtung in einen Energiesparmodus eine andere gemessene Zeit (z.B. eine Benutzerinaktivitätszeit) und/oder ein anderer Zeitschwellwert verwendet wird (z.B. ein Benutzerinaktivitätszeitschwellwert). Zum Beispiel wechselt die Zugangskontrollvorrichtung aus einem Aktivmodus in den Energiesparmodus.

Ein Aktivmodus ist beispielsweise ein Betriebsmodus, in dem zumindest alle Hauptfunktionen einer Vorrichtung aktiv sind. Eine Hauptfunktion der Zugangskontrollvorrichtung ist zum Beispiel die Zugangskontrollfunktion. Zum Beispiel ist die Zugangskontrollvorrichtung im Aktivmodus, wenn alle ihre Mittel und/oder Komponenten im Aktivmodus sind. Zum Beispiel ist die Zugangskontrollvorrichtung im Aktivmodus, wenn zumindest die Steuermittel, die Eingabemittel und die Kommunikationsmittel der Zugangskontrollvorrichtung im Aktivmodus sind.

Ein Energiesparmodus ist beispielsweise ein Betriebsmodus, in dem eine Vorrichtung weniger Energie als im Aktivmodus verbraucht. Zum Beispiel sind zumindest einige Funktionen einer Vorrichtung in dem Energiesparmodus reduziert und/oder deaktiviert. Zum Beispiel sind die Eingabemittel und/oder die Kommunikationsmittel der Zugangskontrollvorrichtung im Energiesparmodus deaktiviert.

Das Wechseln in den Energiesparmodus ist beispielsweise vorteilhaft, um den Energieverbrauch der Zugangskontrollvorrichtung zu reduzieren.

Gemäß einer beispielhaften Ausführungsform der Erfindung umfasst das Verfahren ferner das Erhalten von Zugangsberechtigungsinformation zum Aktivieren des Verriegelns der zumindest einen Tür, wenn das Verriegeln der zumindest einen Tür deaktiviert ist, das Entscheiden, ob Zugang gewährt werden darf, zumindest teilweise in Abhängigkeit der erhaltenen Zugangsberechtigungsinformation, und das Bewirken des Aktivierens des Verriegelns der zumindest einen Tür nur dann, wenn entschieden wurde, dass Zugang gewährt werden darf.

Das Erhalten von Zugangsberechtigungsinformation zum Aktivieren des Verriegelns der zumindest einen Tür entspricht beispielsweise dem oben beschriebenen Erhalten von Zugangsberechtigungsinformation zum Gewähren eines Zugangs. Allerdings wird die Zugangsberechtigungsinformation in dieser Ausführungsform erhalten, wenn das Verriegeln der zumindest einen Tür deaktiviert ist.

Wie oben beschrieben, wird die Zugangsberechtigungsinformation beispielsweise an der Zugangskontrollvorrichtung von einem Benutzer erhalten (z.B. einem Benutzer, der Zugang haben möchte). Zum Beispiel gibt der Benutzer die Zugangsberechtigungsinformation an der Zugangskontrollvorrichtung (z.B. an Eingabemitteln der Zugangskontrollvorrichtung) ein und/oder kommuniziert sie von einer Zugangsberechtigungsnachweisvorrichtung an die Zugangskontrollvorrichtung (z.B. an Kommunikationsmittel der Zugangskontrollvorrichtung).

Unter Entscheiden, ob Zugang gewährt werden darf, soll, wie oben beschrieben, beispielsweise verstanden werden, dass geprüft wird, ob die erhaltene Zugangsberechtigungsinformation zum Zugang berechtigt (z.B. durch die Zugangskontrollvorrichtung). Zum Beispiel sind die Steuermittel der Zugangskontrollvorrichtung eingerichtet, zu prüfen, ob die erhaltene Zugangsberechtigungsinformation zum Zugang berechtigt.

Nur dann, wenn entschieden wurde, dass Zugang gewährt werden darf, wird das Aktivieren des Verriegelns der zumindest einen Tür bewirkt. Wie oben beschrieben, können zum Beispiel die Steuermittel der Zugangskontrollvorrichtung ein Schloss der zumindest einen Tür steuern. Zum Beispiel können die Steuermittel das Schloss steuern, eine Falle des Schlosses aus einer Offen-Stellung in eine Zu-Stellung zu überführen, so dass die Falle die Tür beim Schließen wieder automatisch verriegelt. Solange sich die Falle in der Offen-Stellung befindet, ist das Verriegeln der Tür beispielsweise deaktiviert. Durch ein Überführen der Falle in ein Zu-Stellung wird das Verriegeln somit wieder aktiviert. Weitere Möglichkeiten zum Aktivieren des Verriegelns der zumindest einen Tür sind denkbar.

Diese Ausführungsform ist beispielsweise vorteilhaft, um ein Aktivieren des Verriegelns der zumindest einen Tür zu ermöglichen, wenn das Verriegeln deaktiviert wurde. Dabei kann durch die Entscheidung, ob Zugang gewährt werden darf, sichergestellt werden, dass nur berechtigte Benutzer das Bewirken des Aktivierens des Verriegelns der Tür veranlassen können (und z.B. keine spielenden Kinder).

Gemäß einer beispielhaften Ausführungsform der Erfindung umfasst das Verfahren ferner das Öffnen der zumindest einen Tür (z.B. durch einen Benutzer) und/oder das Schließen der zumindest einen Tür (z.B. durch einen Benutzer). Wie oben beschrieben, wird das Verriegeln der Tür nur deaktiviert, wenn die Tür geöffnet ist. Durch das Schließen der Tür kann das Deaktivieren des Verriegelns der Tür somit beispielsweise verhindert werden. Dies ist beispielsweise vorteilhaft, wenn eine Falle zum Deaktivieren des Verriegelns dauerhaft durch einen Antrieb in einer Offen-Stellung gehalten werden und/oder ein Blockierelement in eine Blockierstellung bewegt werden muss, da ein solches "Offenhalten" und/oder "Bewegen" den Energieverbrauch der Aufnahmevorrichtung erhöht.

Die oben beschriebenen Ausführungsbeispiele und beispielhaften Ausgestaltungen der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine Ansicht einer beispielhaften Ausführungsform eines erfindungsgemäßen Paketkastens;
- Fig. 2: eine dreidimensionale Ansicht eines Verriegelungselementmoduls für die erste Tür des Paketkastens gemäß Fig. 1;
- Fig. 3: eine Schnittzeichnung durch das Verriegelungselementmodul gemäß Fig. 2;
- Fig. 4: eine dreidimensionale Ansicht eines Verriegelungselementmoduls für die zweite Tür des Paketkastens gemäß Fig. 1;
- Fig. 5: eine Seitenansicht des Verriegelungselementmoduls gemäß Fig. 4;
- Fig. 6: eine Schnittzeichnung durch das Verriegelungselementmodul gemäß Fig. 4;
- Fig. 7: eine Explosionsdarstellung der Verriegelungselementmodule gemäß Fig. 2 und Fig. 4 vor ihrer Montage;
- Fig. 8: einen Montageträger zur Montage der Verbindungselementmodule;
- Fig. 9: auf dem Montageträger gemäß Fig. 8 montierte Verriegelungselementmodule gemäß Fig. 2 und Fig. 4 in dreidimensionaler Ansicht;
- Fig. 10: ein Blockschaltbild der elektronischen Komponenten einer beispielhaften Ausführungsform einer erfindungsgemäßen Zugangskontrollvorrichtung;
- Fig. 11: ein Flussdiagramm einer beispielhaften Ausführungsform eines erfindungsgemäßen Verfahrens;
- Fig. 12: ein Flussdiagramm eines Beispiels für ein erfindungsgemäßes Verfahren; und
- Fig. 13: ein Flussdiagramm eines Beispiels für eine erfindungsgemäße Verwendung.

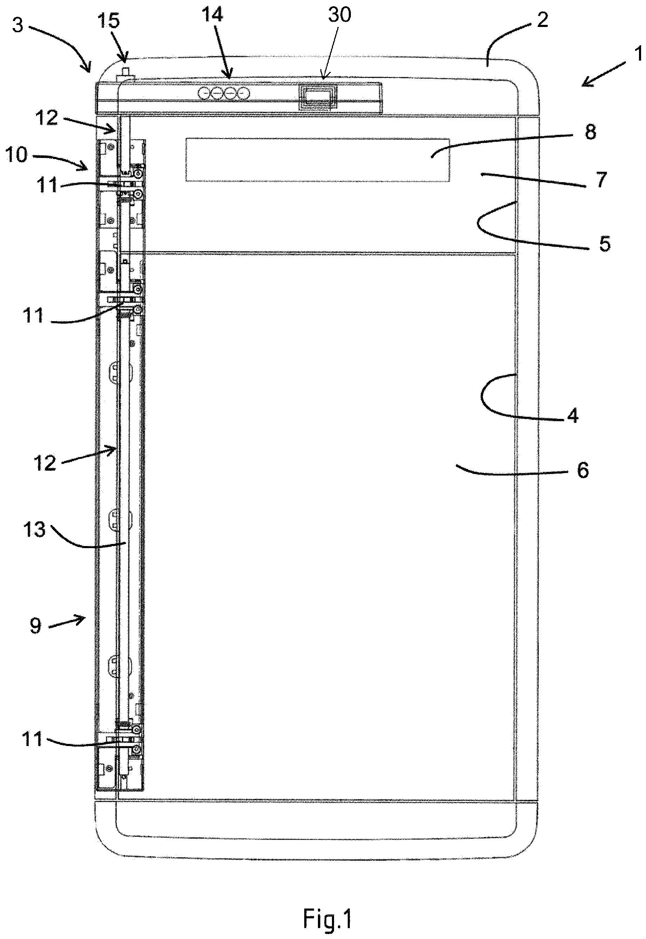

Anhand der Fig. 1 bis 9 wird eine erfindungsgemäße Aufnahmevorrichtung anhand einer besonders bevorzugten Ausführungsform als Paketkasten 1 zur Aufnahme von zuzustellenden Briefen und Paketen beschrieben. Es wird jedoch darauf hingewiesen, dass es sich bei dem Paketkasten 1 zwar um eine besonders bevorzugte Ausführungsform der vorliegenden Erfindung handelt. Diese ist jedoch nicht auf die Verwendung in Paketbriefkästen beschränkt, insbesondere ist die erfindungsgemäße Zugangskontrollvorrichtung nicht auf die Verwendung in einem Paketkasten wie dem Paketkasten 1 beschränkt, sondern kann generell in Zugangskontrollsystemen eingesetzt werden.

Der Paketkasten 1 umfasst ein Gehäuse 2, eine Verriegelungseinheit 3 und eine erfindungsgemäße Zugangskontrollvorrichtung 30. Das Gehäuse 2 hat eine erste Gehäuseöffnung 4 für ein erstes Aufnahmefach für Pakete und eine zweite Gehäuseöffnung 5 für ein zweites Aufnahmefach für Briefe. Ferner umfasst der Paketkasten 1 eine erste Tür 6 zum Verschließen der ersten Gehäuseöffnung 4 und eine zweite Tür 7 zum Verschließen der zweiten Gehäuseöffnung 5. Die zweite Tür 7 weist einen Schlitz 8 zum Einwurf von Briefen ohne Öffnen der zweiten Tür 7 des zweiten Aufnahmefachs auf. Der Schlitz kann beispielsweise mit einer nach außen oder innen öffenbaren Klappe versehen sein (nicht dargestellt), die nicht verschlossen ist. Beide Türen 6, 7 sind mittels der Verriegelungseinheit 3 verriegelbar.

Die Verriegelungseinheit 3 weist jeweils ein Verriegelungselementmodul 9, 10 mit mindestens einem in dem dargestellten Beispiel als Schließhaken ausgebildeten Verriegelungskörper 11 für jede Tür 6, 7 und mit einem Verriegelungsantrieb 12 zum Betätigen der Verriegelungskörper 11 auf.

In dem Paketkasten 1 weist das Verriegelungselementmodul 9 für die erste Tür 6 zwei Verriegelungskörper 11 und das Verriegelungselementmodul 10 für die zweite Tür 7 lediglich einen Verriegelungskörper 11 auf. Der Verriegelungsantrieb 12 für jedes der beiden Verriegelungselementmodule 9, 10 weist ein gemeinsames Antriebselement 13 auf, das als drehbare Achse in Form einer Stange ausgebildet ist. Die Stange 13 als gemeinsames Antriebselement ist um einen Verstellweg bewegbar (drehbar) ausgebildet.

In einer ersten Verstellposition bringt die Stange 13 lediglich den Verriegelungskörper 11 für die erste Tür 6 in eine Entriegelungsposition. In der zweiten Verstellposition, die durch ein Weiterdrehen der Stange 13 als gemeinsames Antriebselement erreicht wird, werden die Verriegelungskörper 11 für alle Türen 6, 7 in eine Entriegelungsposition gebracht. Für das gemeinsame Antriebselement 13 der Verriegelungsantriebe 12 der jeweiligen Verriegelungselementmodule 9, 10 ist ein elektromotorischer Antrieb 14 vorgesehen, der mittels einer Kopplung 15 mit dem gemeinsamen Antriebselement 13 (Stange) in Wirkverbindung so gekoppelt ist, dass der elektromotorische Antrieb 14 die Stange 13 (drehbare Achse als gemeinsames Antriebselement) zwischen den verschiedenen Verstellpositionen bewegen kann.

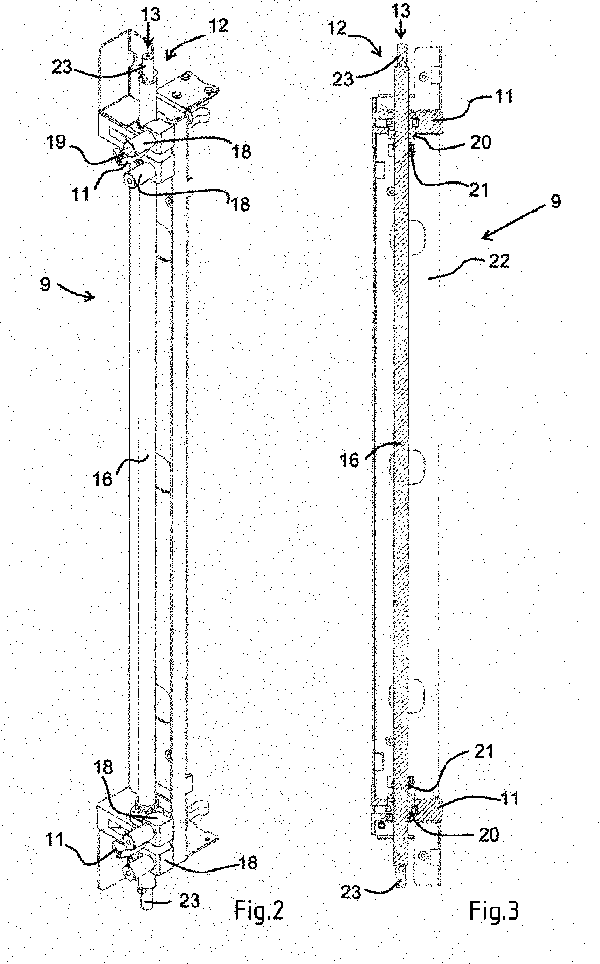

Nachfolgend wird mit Bezug auf die Fig. 2 bis 9 der Aufbau der Verriegelungseinheit 3 anhand des Beispiels des Paketkastens 1 mit zwei Türen 6, 7 näher beschrieben. Die beschriebenen und/oder dargestellten Merkmale lassen sich, wie für den Fachmann ohne weiteres ersichtlich, auch auf andere Gehäuse 2 mit ggf. mehr als zwei Gehäuseöffnungen 4, 5 übertragen, indem die einzelnen Verriegelungselementmodule 9, 10 in entsprechend größerer Zahl miteinander kombiniert bzw. gekoppelt werden.

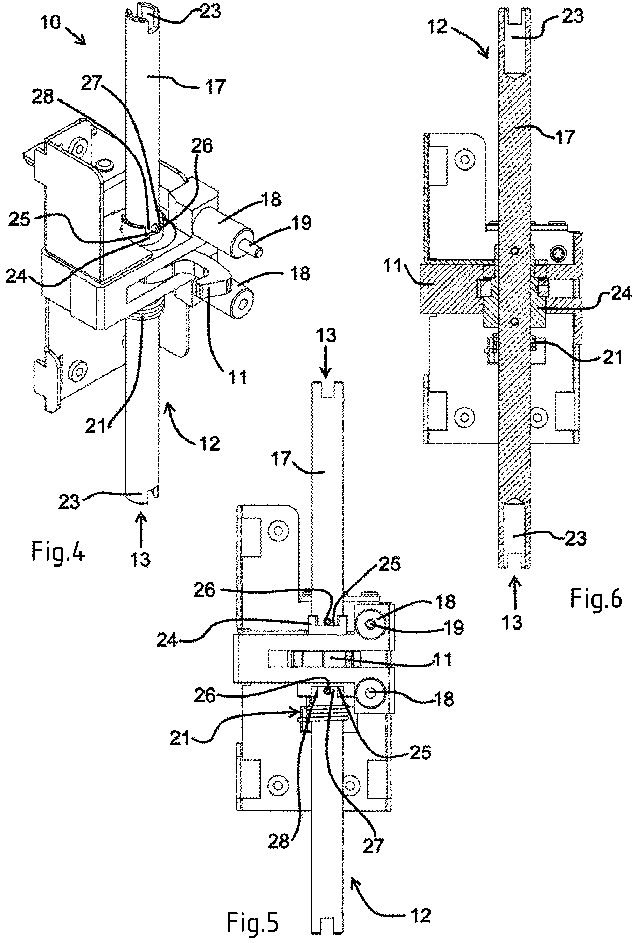

Das in Fig. 2 dargestellte Verriegelungselementmodul 9 für die erste Tür 6 weist als Verriegelungsantrieb 12 ein erstes Stangenteil 16 auf, das mit einem zweiten Stangenteil 17 des in Fig. 4 dargestellten Verriegelungselementmoduls 10 verbunden wird, um das gemeinsame Antriebselement 13 der Verriegelungseinheit 3 zu bilden.

An dem ersten Stangenteil 16 sind zwei als Schließhaken ausgebildete Verriegelungskörper 11 angeordnet, indem diese Verriegelungskörper 11 (Schließhaken) unbeweglich, d.h. fix und gegenüber dem ersten Stangenteil 16 unverdrehbar, an dem ersten Stangenteil 16 festgelegt sind. Das erste Stangenteil 16 bildet also den Verriegelungsantrieb 12 des ersten Verriegelungselementmoduls 9 für die erste Tür 6, indem durch Verdrehen des Stangenteils 16 der Schließhaken 11 unmittelbar mitgedreht wird, und zwar aus der in Fig. 2 dargestellten Verriegelungsposition in eine Entriegelungsposition, in welcher der Schließhaken 11 ein nicht dargestelltes Riegelelement der ersten Tür 6 freigibt, so dass die Tür 6 geöffnet werden kann.

Um die erste Tür 6 automatisch zu öffnen, wenn der Schließhaken 11 das Riegelelement der ersten Tür freigibt, sind in axialer Richtung jeweils oberhalb und unterhalb des Schließhakens Führungshalterungen 18 zur Aufnahme eines mittels einer Druckfeder oder dergleichen vorgespannten Auswerfstößels 19 vorgesehen. Wie in Fig. 2 dargestellt, ist ein Auswerfstößel 19 in der Regel ausreichend, um die Tür nach Freigabe der Verriegelung automatisch zu öffnen.

An dem Auswerfstößel 19 kann ein Türöffnungssensor, zum Beispiel ein mit einem Magnetsensor zusammenwirkender Permanentmagnet, angeordnet sein, um einen Offenzustand der Tür zu detektieren. Dies kann beispielsweise für eine Logbuchfunktion der Zugangskontrollvorrichtung 30 verwendet werden, welche das Öffnen und Schließen der Türen 6, 7 des Gehäuses 2 in einem Logbuch aufzeichnet. Ein solches Logbuch kann durch den Nutzer abgerufen und überprüft werden.

Der Schnittzeichnung gemäß Fig. 3 ist zu entnehmen, dass die als Schließhaken ausgebildeten Verriegelungskörper 11 über eine Montagehülse 20 mit dem ersten Stangenteil 16 des ersten Verriegelungselementmoduls 9 verbunden sind, so dass die Montagehülse 20 und der Verriegelungskörper 11 nicht gegenüber der durch das erste Stangenteil 16 gebildeten Achse (als Teil des gemeinsamen Antriebselements 13) verdreht werden können. Die Kräfte einer Drehung des ersten Stangenteils 16 werden also direkt auf den Schließhaken (Verriegelungskörper 11) übertragen.

Daher wäre es grundsätzlich auch möglich, den Schließhaken 11 direkt, d.h. ohne das Vorsehen einer Montagehülse 20, mit dem ersten Stangenteil 16 zu verbinden. Die Verwendung der Montagehülse 20 hat jedoch den Vorteil, dass durch Verwendung der Montagehülse 20 derselbe Verriegelungskörper 11 für das erste Verriegelungselementmodul 9 und das zweite Verriegelungselementmodul 10 verwendet werden kann, das später mit Bezug auf die Fig. 4 bis 6 noch detailliert beschrieben wird.

Das erste Verriegelungselementmodul 9 ist als Schnappverschluss ausgebildet. Dies bedeutet, dass die Verriegelungskörper 11 in Schließrichtung, d.h. in die in Fig. 2 dargestellte Verriegelungspositionen, vorgespannt sind. Hierfür ist benachbart zu dem Verriegelungskörper 11 an dem ersten Stangenteil 16 eine Rückstellfeder 21 vorgesehen, welche mit einem Ende an dem ersten Stangenteil 16 und mit dem anderen Ende an einem Verriegelungselementmodulkörper 22 festgelegt ist, welcher die Elemente des ersten Verriegelungselementmoduls 9 trägt. Wenn das erste Stangenteil 16 aus der in Fig. 2 dargestellten Schließposition des Verriegelungskörpers 11 in eine Verstellposition gedreht wird, in welcher der Verriegelungskörper 11 ein nicht dargestelltes Riegelelement der ersten Tür 6 freigibt, wird die Rückstellfeder 21 weiter gespannt, so dass das Stangenteil 16, wenn es von dem elektromotorischen Antrieb 14 nicht mehr in der Freigabe-Verstellposition gehalten wird, zurückdreht, bis der Verriegelungskörper 11 in der in Fig. 2 dargestellten Verriegelungsposition ist.

Wenn nun eine geöffnete Tür 6 geschlossen wird, wird der Schließkörper 11 durch das an der Tür 6 vorhandene Riegelelement aus der Verriegelungsposition gedrückt, indem das Stangenteil 16 entgegen der Kraft der Rückstellfeder 21 verdreht wird. Sobald sich die Tür 6 in der Geschlossen-Position befindet, kann der als Verriegelungskörper 11 ausgebildete Schließhaken das Riegelelement der Tür 6 umschließen, so dass das Stangenteil 16 aufgrund der Rückstellkraft der Rückstellfeder 21 in die Verriegelungsposition zurückgestellt wird und das Riegelelement der Tür 6 in die Hakenöffnung des Schließhakens 11 eingreift. Dies wird als Schnappverschluss bezeichnet. Es sind jedoch auch andere Ausgestaltungen eines Schnappverschlusses denkbar, beispielsweise Ausgestaltungen, bei denen eine Falle linear entgegen der Kraft einer Rückstellfeder beim Schließen einer Tür bewegt wird (z.B. wie bei einem Einsteckschloss für eine Zimmertür oder Wohnungstür).

Das in den Fig. 4 bis 6 im Detail dargestellte zweite Verriegelungselementmodul 10 für die zweite Tür 7 weist ein zweites Stangenteil 17 auf, das über eine Kopplung 23 (auch als Koppelstücke bezeichnet) mit dem ersten Stangenteil 16 gekoppelt werden kann. Dazu sind Elemente der Kopplung 23 sowohl an dem ersten Stangenteil 16 als auch an dem zweiten Stangenteil 17 ausgebildet, die bei Verbindung der beiden Stangenteile 16, 17 formschlüssig ineinandergreifen und die Drehbewegung eines Stangenteils 16, 17 unmittelbar auf das andere Stangenteil 16, 17 übertragen. In zu dem Verriegelungselementmodul 9 für die erste Tür 6 analoger Weise weist auch das Verriegelungselementmodul 10 für die zweite Tür 7 einen als Schließhaken ausgebildeten Verriegelungskörper 11 auf, der durch Verdrehen des zweiten Stangenteils 17 zwischen einer in Fig. 4 dargestellten Schließposition und einer Entriegelungs- oder Freigabeposition verstellt werden kann, in welcher der Schließhaken 11 ein nicht dargestelltes Riegelelement der zweiten Tür 7 freigibt.

In der entriegelten Position wird die zweite Tür 7 von einem Auswerfstößel 19 automatisch geöffnet, der in einer Führungshalterung 18 vorgesehen ist. Wie auch bei dem ersten Verriegelungselementmodul 9 befinden sich zwei Führungshalterungen 18 in axialer Richtung auf beiden Seiten des Verriegelungskörpers 11, wobei ein Auswerfstößel 19 nur in einer der beiden Führungshalterungen vorgesehen werden muss, um die zweite Tür 7 nach der Entriegelung zuverlässig zu öffnen.

Anders als bei dem ersten Verriegelungselementmodul 9 ist der Verriegelungskörper 11 des zweiten Verriegelungselementmoduls 10 um die durch das zweite Stangenelement 17 im Bereich des zweiten Verriegelungselementmoduls 10 gebildete drehbare Achse 13 mit einem definierten Spiel verdrehbar gelagert. Dies hat zur Folge, dass ein an dem zweiten Stangenteil 17 verdrehbar gelagerter Verriegelungskörper 11 nur mitbewegt wird, wenn das Spiel in dem Verstellweg des gemeinsamen Antriebselements 13, respektive des zweiten Stangenteils 17, überschritten ist. Erst dann beginnt die Drehbewegung des Verriegelungskörpers 11, durch welche der Schließhaken (Verriegelungskörper 11) außer Eingriff mit dem Riegelelement der zweiten Tür 7 gebracht wird. Erst dann erfolgt also das Öffnen der zweiten Tür 7 und damit die Freigabe der zweiten Gehäuseöffnung in das Aufnahmefach für Briefe.

Für das Vorsehen des Spiels ist der Verriegelungskörper 11 des zweiten Verriegelungselementmoduls 10 über eine Lagerhülse verdrehbar auf dem zweiten Stangenteil 17 gelagert. Dazu weist die Lagerhülse 24 eine Ausnehmung 25 auf, welche auf der durch das Stangenteil 17 gebildeten, auch selbst drehbaren Achse 13 beweglich geführt ist. Dazu greift ein auf der Achse 13 radial vorstehender Bolzen 26 in die Ausnehmung 25 der Lagerhülse 24 ein. Dadurch wird das Spiel zum Verdrehen der Lagerhülse 24 auf der Achse 25 definiert, weil sich der Bolzen 26 in der Ausnehmung 25 soweit drehen kann, bis er den Rand der Ausnehmung 25 erreicht, bevor die Lagerhülse 24 bei einer Bewegung des Stangenteils 17 mitgedreht wird. Der Schließhaken 11 ist fix mit der Lagerhülse 24 verbunden.

Wie der Seitenansicht des Verriegelungselementmoduls 10 für die zweite Tür 7 gemäß Fig. 5 zu entnehmen, weist die Lagerhülse 24 zwei Ausnehmungen 25 an den gegenüberliegenden axialen Enden der Lagerhülse 24 auf, in die jeweils ein auf der durch das zweite Stangenteil 17 gebildeten drehbaren Achse 13 radial vorstehender Bolzen 26 eingreift. Dies bewirkt, dass die Lagerhülse 24 durch die beiden in die Ausnehmungen 25 eingreifenden Bolzen 26 axial fixiert ist und durch die Ausnehmung 25, in welche die Bolzen 26 aufgenommen sind, das Spiel zum Verdrehen der Lagerhülse 24 um die Achse 13 vorgegeben ist.

In der in den Fig. 4 und Fig. 5 dargestellten Schließstellung, in welcher sich der Schließhaken 11 in der Verriegelungsposition befindet, sind die Bolzen 26 in einem mittleren Bereich der das Spiel für das Verdrehen der Lagerhülse 24 auf der Achse definierenden Ausnehmung 25 aufgenommen. Damit ergeben sich zwei Spielbereiche 27, 28 in der Ausnehmung 25 für jede Drehrichtung der Achse 13 respektive des zweiten Stangenteils 17. Der erste Spielbereich 27 bewirkt, dass das erste Stangenteil 17 zunächst in Richtung einer Öffnungsbewegung gedreht werden kann, ohne dass der Verriegelungskörper 11 aus seiner Verriegelungsposition, in welche er das Riegelelement der zweiten Tür 7 freigibt, weggedreht wird. Andererseits wird, wie bereits erläutert, bei der Drehbewegung der drehbaren Achse 13 als gemeinsames Antriebselement der Verriegelungskörper des ersten Stangenteils 16 in dem ersten Verriegelungselementmodul 9 bereits in eine Entriegelungsposition überführt, so dass die erste Tür 6 bereits öffnet. Durch den ersten Spielbereich 27 in der Ausnehmung 25 wird also bewirkt, dass die zweite Tür 7 erst nach der ersten Tür 6 öffnet.

Wird also die drehbare Achse 13 als gemeinsames Antriebselement nur in eine erste Verstellposition verbracht, in der der radial vorstehende Bolzen 26 in der Ausnehmung 25 nur den ersten Spielbereich 27 ausnutzt, ohne gegen den Rand der Ausnehmung 27 zu stoßen und die Lagerhülse 24 mit zu bewegen, wird nur die erste Tür 6 entriegelt und die zweite Tür 7 bleibt verriegelt. Durch eine entsprechend gesteuerte Drehbewegung der drehbaren Achse 17 kann also gezielt nur die erste Tür 6 zur Öffnung freigegeben werden.

Erst wenn die drehbare Achse 13 in eine zweite Verstellposition weitergedreht wird, nimmt der radial vorstehende Bolzen 26 in Anlage an den Rand der Ausnehmung 25 die Lagerhülse 24, und damit den Schließhaken 11, mit, um auch die zweite Tür 7 zu entriegeln.

Ist dagegen die zweite Tür 7 geöffnet und befindet sich die drehbare Achse 13, respektive das zweite Stangenteil 17, in der in den Fig. 4 und 5 gezeigten Verriegelungsposition, wird der Schließkörper 11 beim Zudrücken der Tür in ihre verriegelte Position aus der in den Fig. 4 und 5 dargestellten Verriegelungsposition herausgedrückt, indem das Riegelelement der Tür an dem Schließkörper 11 anstößt. Dabei wird die Lagerhülse 24 auf der drehbaren Achse 13, respektive dem zweiten Stangenteil 17, verdreht, bis sich die zweite Tür 7 in ihrer Geschlossen-Stellung befindet und das Riegelelement der zweiten Tür 7 von dem Schließhaken 11 umfasst werden kann. In dieser Position schnappt der Schließhaken 11, angetrieben durch die Rückstellfeder 21, analog zu dem zuvor beschriebenen Fall für das erste Verriegelungselementmodul 10 in die Schließstellung zurück.

Dafür ist der zweite Spielbereich 28 der Ausnehmung 25 vorgesehen, der eine Bewegung der Lagerhülse 27 (und des mit der Lagerhülse 27 fest verbundenen Schließkörpers 11) erlaubt, ohne dass der gemeinsame Antrieb 26 mitgedreht wird.

Wie der Schnittzeichnung gemäß Fig. 6 zu entnehmen, ist die Lagerhülse 24, abgesehen von den in der Ausnehmung 25 geführten Bolzen 26, auf dem zweiten Stangenteil 17 frei beweglich gelagert.

Für die Kopplung 23 des zweiten Stangenteils 17 an das erste Stangenteil 16 weist das zweite Stangenteil 17 eine axiale Bohrung mit einer radial verlaufenden Ausnehmung auf, in welche ein in Fig. 3 dargestellter Achsenkern mit radial verlaufendem Bolzen eingreift, so dass die ersten und zweiten Stangenteile 17 in Axialrichtung einfach ineinander gesteckt werden können und eine Drehung direkt aufeinander übertragen. Achskern und axiale Bohrung werden auch als Koppelstücke bezeichnet, die geeignet zusammenwirken, um die Kopplung 23 zu bewirken.

Die Koppelstücke der Kopplung 23 an dem ersten Stangenteil 16 und dem zweiten Stangenteil 17 sind über die horizontale Mittelachse symmetrisch ausgebildet, so dass eine Links-Rechts-Tauschbarkeit des ersten Verriegelungselementmoduls 9 und des zweiten Verriegelungselementmoduls 10 gegeben ist. Hierdurch kann das Modul einfach von einem Rechtsanschlag der Tür auf einen Linksanschlag der Tür bzw. umgekehrt durch eine Drehung um 180° getauscht werden.

Um diese Tauschbarkeit auch hinsichtlich des Angriffes der Verriegelungskörper 11 an den nicht dargestellten Riegelelementen der Türen 6, 7 zu erreichen, ist ferner vorgesehen, dass der eine bzw. die mehreren Verriegelungskörper 11 auf einem Stangenteil 16, 17 in axialer Richtung bezogen auf die horizontale Mittelachse des Stangenteils 16, 17 spiegelsymmetrisch angeordnet sind. Das heißt, dass die Verriegelungskörper auf beiden Hälften des Stangeteils 16, 17 bezogen auf die Mitte des Stangenteils 16, 17 symmetrisch angeordnet sind. Damit liegen die Verriegelungskörper 11 jeweils nach einer Drehung des Verriegelungselementmoduls 9, 10 um 180° axial in derselben Höhe, so dass sie entsprechend an den Riegelelementen der Türen 6, 7 angreifen zu können.

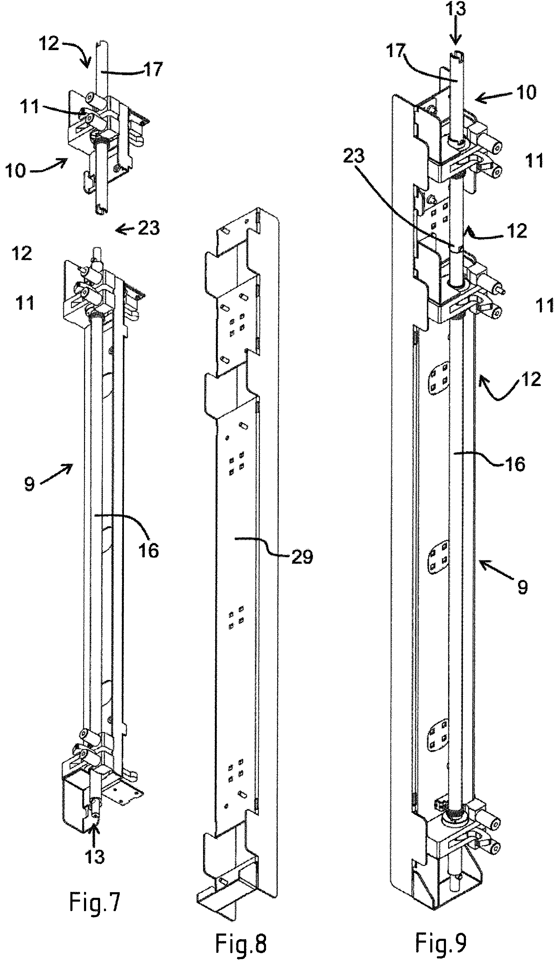

In Fig. 7 sind in einer Explosionsdarstellung das Verriegelungselementmodul 9 für die erste Tür und das Verriegelungselementmodul 10 für die zweite Tür 7 gezeigt, die zuvor mit Bezug auf die Fig. 2 bzw. Fig. 4 schon detailliert erläutert wurden. Die Verriegelungselementmodule 9, 10 weisen entsprechend ein erstes Stangenteil 16 bzw. ein zweites Stangenteil 17 auf, die über die zuvor beschriebene Kopplung 23 in einander gesteckt werden können, so dass bei der Drehung eines Stangenteils 16, 17 das andere Stangenteil 17, 16 mit dreht.

In Fig. 7 sind die beiden Elemente kurz vor dem Zusammenstecken dargestellt. Nach dem Zusammenstecken bilden das erste Stangenteil 16 und das zweite Stangenteil 17 zusammen das gemeinsame Antriebselement 13 (drehbare Achse), das über die Kopplung 15 mit dem elektromotorischen Antrieb 14 verbunden werden kann (vgl. Fig. 1). Der elektromotorische Antrieb 14 kann auch eine Steuerung mit Authentifizierungsfunktion enthalten, die je nach erfolgter Authentifizierung die Verstellung der drehbaren Achse 13 als gemeinsames Antriebselement derart vornimmt, dass entweder nur die erste Tür 6 (insbesondere des Paketfaches) oder gemeinsam die erste Tür 6 und die zweite Tür 7 (insbesondere des Paketfaches und des Briefkastens zusammen) geöffnet wird.

Um den Schnappverschluss wirksam zu gestalten, kann vorgesehen sein, dass nach der Öffnung der Türen 6 und/oder 7, nachgewiesen bspw. durch einen entsprechenden Türöffnungssensor in Verbindung mit dem Auswerfstößel 19 für jede Tür 6, 7, die drehbare Achse 13 durch den elektromotorischen Antrieb 14 wieder in die Schließstellung zurückgedreht wird, in der die Verriegelungskörper 11 die in den Fig. 4 und 6 gezeigten Positionen aufweisen.

Nach dem Zusammenstecken der Verriegelungselementmodule 9, 10 können diese auf dem in Fig. 8 gezeigten Montageträger 29 in Form eines Montageblechs montiert werden, wobei für einen Rechts- bzw. Linksanschlag der Türen 6, 7 die Verriegelungselementmodule 9, 10 in jeder der beiden möglichen, um 180° gedrehten Positionen angebracht werden können.

Fig. 9 zeigt den Montageträger 8 mit den darauf montierten Verriegelungselementmodulen 9, 10, deren erste und zweite Stangenteile 16, 17 zu dem gemeinsamen Antriebselement 13 (drehbare Achse) zusammengefügt sind.

Durch die vorgeschlagene Verriegelungseinheit 3 wird ein einfach handhabbarer Verriegelungsmechanismus für ein Gehäuse 2 mit Gehäuseöffnungen 4, 5, die jeweils durch Türen 6, 7 verschließbar und verriegelbar sind, vorgeschlagen, wobei eine erste Gruppe von Türen 6 separat entriegelt werden kann, indem ein gemeinsames Antriebselement 13 der Verriegelungseinheit 3 in eine erste Verstellposition gebracht wird. Bei dem Verbringen des gemeinsamen Antriebselements 13 in eine zweite Verstellposition werden dann beide Türen 6, 7 gemeinsam entriegelt. Diese Anwendung eignet sich besonders gut für einen Paketkasten, bei dem ein Paketzusteller die erste Tür des Paketfaches unabhängig von der zweiten Tür des Brieffaches öffnen und schließen kann.

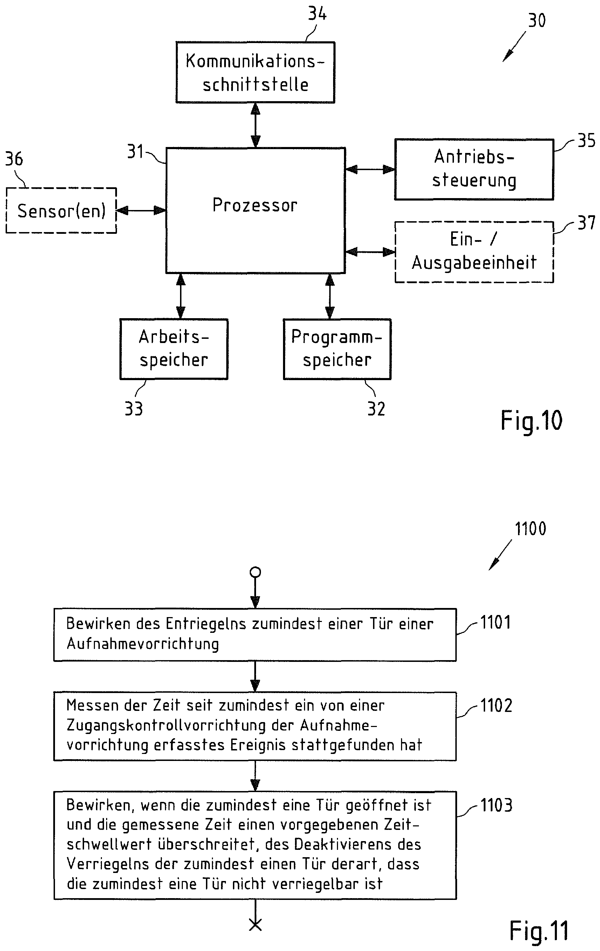

Fig. 10 ist ein Blockschaltbild einer beispielhaften Ausführungsform der erfindungsgemäßen Zugangskontrollvorrichtung 30. Wie in Fig. 1 dargestellt, kann die Zugangskontrollvorrichtung 30 beispielsweise im Inneren des Paketkastens 1, beispielsweise in der Nähe des Antriebs 14 (siehe Fig. 1) angeordnet sein.

Prozessor 31 der Zugangskontrollvorrichtung ist insbesondere als Mikrocontroller ausgebildet. Prozessor 31 führt Programmanweisungen aus, die in Programmspeicher 32 gespeichert sind, und speichert beispielsweise Zwischenergebnisse oder ähnliches in Arbeitsspeicher 33. Zum Beispiel ist Programmspeicher 32 ein nicht-flüchtiger Speicher wie ein Flash-Speicher, ein Magnetspeicher, ein EEPROM-Speicher, ein persistenter Speicher wie ein ROM-Speicher und/oder ein optischer Speicher. Arbeitsspeicher 33 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Vorzugsweise sind Programmspeicher 32 und Arbeitsspeicher 33 zusammen mit Prozessor 31 in einem Modul angeordnet.

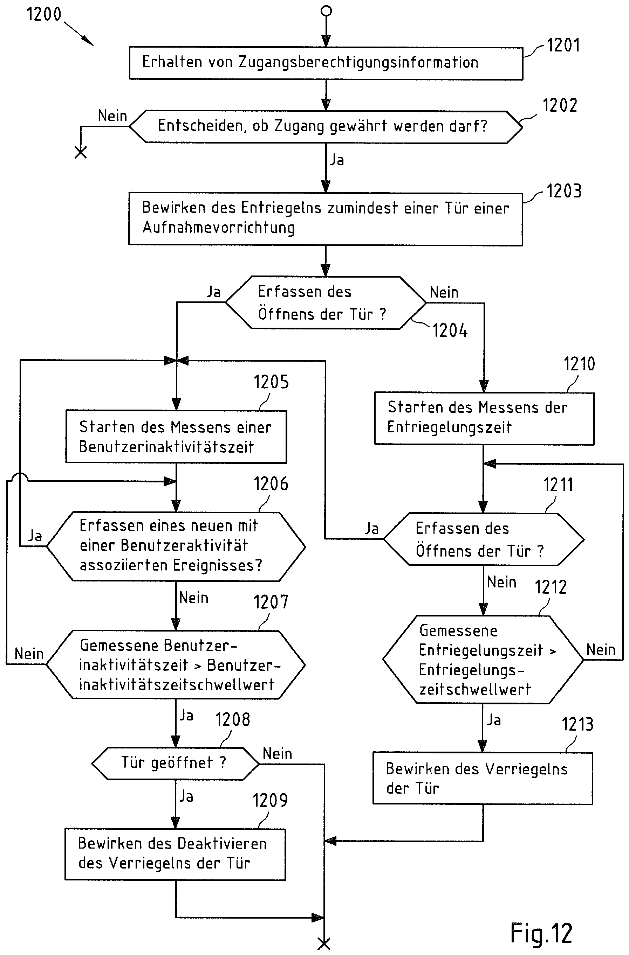

In Programmspeicher 32 sind beispielsweise Programmanweisungen gespeichert, die den Prozessor 31, wenn er die Programmanweisungen ausführt, veranlassen, zumindest teilweise die in Fig. 11 und 12 dargestellten Verfahren auszuführen und/oder zu steuern. Im Programmspeicher 32, oder in einem separaten (z.B. persistenten) Speicher kann auch Information gespeichert sein, die bei der Prüfung der Berechtigung einer Person, ein oder mehrere Türen 6, 7 des Paketkastens 1 zu öffnen, genutzt wird (z.B. eine Kennung des Paketkastens 1 und/oder der Zugangskontrollvorrichtung 30, ein oder mehrere Schlüssel zur Prüfung einer Zugangsberechtigungsinformation, etc.).

Die Kommunikationsschnittstelle 34 ist zum Beispiel eingerichtet, gemäß einer drahtlosen Kommunikationstechnik zu kommunizieren. Im Folgenden wird beispielhaft angenommen, dass die drahtlose Kommunikationstechnik NFC ist. Zum Beispiel wird die Kommunikationsschnittstelle 34 zumindest teilweise von einem integrierten NFC Sendeempfänger wie dem NFC Sendeempfänger CR95HF von ST Microelectronics und einer NFC-Antenne (z.B. einer magnetischen Antenne) gebildet. Optional kann die Zugangskontrollvorrichtung beispielsweise noch eine oder mehrere weitere Kommunikationsschnittstellen umfassen, zum Beispiel eine weitere Kommunikationsschnittstelle, die eingerichtet ist, gemäß Bluetooth zu kommunizieren. Zum Beispiel wird diese weitere Kommunikationsschnittstelle zumindest teilweise von einem Bluetooth Sendeempfänger und einer Bluetooth-Antenne gebildet.

Der Prozessor 31 kann beispielsweise über die Kommunikationsschnittstelle 34 mit anderen Vorrichtungen wie einer Zugangsberechtigungsnachweisvorrichtung kommunizieren. Prozessor 31 ist beispielsweise operativ mit der Kommunikationsschnittstelle 34 verbunden. Beispielsweise kann die Kommunikationsschnittstelle 34 Informationen von anderen Vorrichtungen empfangen oder abfragen und an Prozessor 31 weiterleiten und/oder Informationen von Prozessor 31 empfangen und an andere Vorrichtungen senden. Zum Beispiel steuert Prozessor 31 die Kommunikationsschnittstelle 34 zumindest teilweise.

Der Prozessor steuert ferner eine Antriebssteuerung 35, die eingerichtet ist, den Antrieb 14 (siehe Fig. 1) zu steuern. Beispielsweise ist die Antriebssteuerung Teil des Antriebs 14. Es ist jedoch auch denkbar, dass die Antriebssteuerung kein Teil des Antriebs 14 ist. Beispielsweise werden Steuersignale des Prozessors 31 in der Antriebssteuerung 35 in Spannungssignale für den Antrieb 14 umgesetzt, um das mit dem Antrieb 14 gekoppelte gemeinsame Antriebselement 13 in eine erste oder zweite Verstellposition oder in die Schließposition zu bewegen. Die von dem gemeinsamen Antriebselement 13 eingenommene Bewegungsstellung kann beispielsweise mit einem oder mehreren der Sensoren 36 (beispielsweise einem Magnetfeldsensor, wie bereits oben ausgeführt wurde) überprüft und beispielsweise in den Steuerungsprozess einbezogen werden.

Weitere der optionalen Sensoren 36 dienen beispielsweise zur Erfassung, ob jeweilige der Türen 6, 7 geöffnet oder geschlossen sind. Wie oben erläutert, kann es sich dabei beispielsweise um Türöffnungssensoren handeln, die beispielsweise jeweils an den Auswerfstößeln 19 angebracht sind. Die Sensoren 36 leiten beispielsweise entsprechende Informationen an den Prozessor 31 weiter oder stellen dem Prozessor 31 entsprechende Informationen zum Abfragen bereit.

Des Weiteren kann Prozessor 31 eine oder mehrere optional vorhandene Ein-/Ausgabeeinheiten 37 steuern. Eine Ein-/Ausgabeeinheit 37 ist beispielsweise eine Tastatur, eine Anzeigeeinheit, ein Mikrofon, eine berührungsempfindliche Anzeigeeinheit, ein Lautsprecher, ein Lesegerät, ein Laufwerk, eine Leuchte, eine Leuchtdiode, ein optisches Erfassungsmittel (z.B. ein Scanner) und/oder eine Kamera. Eine Ein-/Ausgabeeinheit 37 kann beispielsweise Eingaben eines Benutzers aufnehmen und an Prozessor 31 weiterleiten und/oder Informationen für den Benutzer von Prozessor 31 empfangen und ausgeben.

Die Komponenten 31 bis 37 können beispielsweise zusammen als Modul ausgebildet sein, oder können zumindest teilweise als Einzelmodule ausgebildet sein, um eine leichte Austauschbarkeit bei etwaigen Defekten zu gewährleisten. Zugangskontrollvorrichtung 30 kann neben den Komponenten 31 bis 37 weitere Komponenten umfassen und ist nicht auf diese Komponenten beschränkt. Zum Beispiel kann Zugangskontrollvorrichtung als weitere Komponente ein oder mehrere Energieversorgungsmittel wie eine Batterie umfassen.

Fig. 11 ist ein Flussdiagramm 1100, das beispielhaft die Schritte eines erfindungsgemäßen Verfahrens darstellt. Die im Flussdiagramm 1100 dargestellten Schritte werden von Komponenten der Zugangskontrollvorrichtung 30 ausgeführt und/oder gesteuert. Beispielsweise werden die Schritte zumindest teilweise von dem Prozessor 31 der Zugangskontrollvorrichtung 30 ausgeführt und/oder gesteuert.

In einem Schritt 1101 wird das Entriegeln zumindest einer der Türen 6, 7 des Paketkastens 1 bewirkt. Zum Beispiel bewirkt der Prozessor 31 das Entriegeln zumindest einer der Türen 6, 7. Die Türen 6, 7 sind beispielsweise entriegelt, wenn die Riegelelemente der Türen 6, 7 freigegeben sind und die Türen 6, 7 geöffnet werden können (z.B. automatisch geöffnet werden).

Zum Beispiel ist der Prozessor 31 eingerichtet, die Antriebsteuerung 35 derart anzusteuern, dass der Antrieb 14 die Stange 13 in die erste Verstellposition dreht, so dass der Schließhaken 11 des ersten Verriegelungsmoduls 9 ein Riegelelement der Tür 6 freigibt und die Tür 6 geöffnet werden kann. Zum Beispiel ist der Prozessor 31 eingerichtet, die Antriebsteuerung 35 derart anzusteuern, dass der Antrieb 14 die Stange 13 in die zweite Verstellposition dreht, so dass der Schließhaken 11 des ersten Verriegelungsmoduls 9 ein Riegelelement der Tür 6 freigibt und die Tür 6 geöffnet werden kann und dass der Schließhaken 11 des zweiten Verriegelungsmoduls 10 ein Riegelelement der Tür 7 freigibt und die Tür 7 geöffnet werden kann.

In einem Schritt 1102 wird die Zeit seit zumindest ein von der Zugangskontrollvorrichtung 30 des Paketkastens 1 erfasstes Ereignis stattgefunden hat gemessen. Zum Beispiel wird die Zeit von dem Prozessor 31 gemessen.

Unter einem von der Zugangskontrollvorrichtung 30 erfassten Ereignis soll, wie oben beschrieben, beispielsweise jedes Ereignis verstanden werden, das durch die Zugangskontrollvorrichtung 30 erfassbar ist und auf die Anwesenheit eines Benutzers in der Umgebung des Paketkastens 1 schließen lässt. Zum Beispiel ist ein solches Ereignis ein mit einer Benutzeraktivität assoziiertes Ereignis. Wenn ein solches mit einer Benutzeraktivität assoziiertes Ereignis, das Messen der Zeit auslöst, ist die gemessene Zeit beispielsweise ein Maß für die seit der letzten Benutzeraktivität vergangene Zeit. Zum Beispiel ist das zumindest eine von der Zugangskontrollvorrichtung 30 erfasste Ereignis (z.B. ein mit einer Benutzeraktivität assoziiertes Ereignis) das Detektieren einer Präsenz einer Zugangsberechtigungsnachweisvorrichtung in der Umgebung der Zugangskontrollvorrichtung 30, das Erhalten von Information wie einer Zugangsberechtigungsinformation von einer Zugangsberechtigungsnachweisvorrichtung und/oder von einem Benutzer, die Interaktion mit einem Benutzer wie das Aufnehmen einer Eingabe des Benutzers, das Bewirken des Entriegelns der Tür und/oder das Öffnen der Tür.

Beispielsweise ist der Prozessor 31 eingerichtet, das Messen der Zeit zu starten, wenn ein Ereignis von der Zugangskontrollvorrichtung 30 erfasst wird, und die Zeit zu messen. Zum Beispiel erfasst die Zugangskontrollvorrichtung das zumindest eine Ereignis durch die Kommunikationsschnittstelle 34, die Sensoren 36 und/oder die Ein-/Ausgabeeinheit 37.

In einem Schritt 1103 wird das Deaktivieren des Verriegelns zumindest einer der Türen 6, 7 derart bewirkt, dass die zumindest eine Tür nicht verriegelbar ist, wenn die zumindest eine der Türen 6, 7 geöffnet ist und die gemessene Zeit einen vorgegebenen Zeitschwellwert überschreitet. Zum Beispiel bewirkt der Prozessor 31 das Deaktivieren des Verriegelns.

Unter dem Deaktivieren des Verriegelns der zumindest einen der Türen 6, 7 soll beispielsweise verstanden werden, dass die Tür nicht verriegelbar ist (also von Innen und von Außen geöffnet werden kann, z.B. durch Drücken gegen die Tür oder Ziehen an der Tür geöffnet werden kann). Das Verriegeln der Tür 6 ist beispielsweise deaktiviert, wenn die Stange 13 aus der Schließposition durch den Antrieb 14 in die erste Verstellposition gedreht wird und dort gegen die Spannkraft der Rückstellfeder 21 gehalten wird. Denn in dieser Verstellposition kann das Riegelelement der Tür 6 nicht in die Hakenöffnung des Schließhakens 11 des Verriegelungsmoduls 9 eingreifen, um die Tür beim Schließen zu Verriegeln. In ähnlicher Art und Weise kann das Verriegeln der Türen 6, 7 deaktiviert werden, wenn die Stange 13 aus der Schließposition durch den Antrieb 14 in die zweite Verstellposition gedreht wird und dort gegen die Spannkraft der Rückstellfeder 21 gehalten wird. Zum Beispiel ist der Prozessor 31 eingerichtet, die Antriebssteuerung 35 entsprechend anzusteuern.

Der Zeitschwellwert ist beispielsweise derart gewählt, dass die Wahrscheinlichkeit, dass sich der Benutzer (z.B. der Nutzer/Zusteller) noch in der Nähe der Zugangskontrollvorrichtung befindet, der die Tür geöffnet hat, gering ist. Durch das Deaktivieren des Verriegelns der Tür zu diesem Zeitpunkt kann somit verhindert werden, dass die Tür unbeaufsichtigt und/oder unbeabsichtigt verriegelt wird (z.B. von spielenden Kindern).

Ein mögliche Ausgestaltung des Messens der Zeit und des Bewirkens des Deaktivierens des Verriegelns der zumindest einen der Türen 6, 7 wird unten in Bezug auf die Schritte 1204 bis 1209 des Flussdiagramms 1200 (siehe Fig. 12) beschrieben.

Fig. 12 ist ein Flussdiagramm 1200, das die Schritte eines Beispiels für ein erfindungsgemäßes Verfahren darstellt. Die im Flussdiagramm 1200 dargestellten Schritte werden von Komponenten der Zugangskontrollvorrichtung 30 ausgeführt und/oder gesteuert. Beispielsweise werden die Schritte zumindest teilweise von dem Prozessor 31 der Zugangskontrollvorrichtung 30 ausgeführt und/oder gesteuert.

Im Folgenden wird beispielhaft davon ausgegangen, dass ein Benutzer (z.B. ein Zusteller oder ein Nutzer) des Paketkastens 1 Zugang zu dem ersten Aufnahmefach des Paketkastens haben möchte.

In einem Schritt 1201 wird Zugangsberechtigungsinformation erhalten. Zum Beispiel erhält die Kommunikationsschnittstelle 34 in Schritt 1201 von einer Zugangsberechtigungsnachweisvorrichtung des Benutzers die Zugangsberechtigungsinformation.

In einem Schritt 1202 wird zumindest teilweise in Abhängigkeit der erhaltenen Zugangsberechtigungsinformation entschieden, ob Zugang gewährt werden darf. Zum Beispiel prüft der Prozessor 31 in Schritt 1202, ob die erhaltene Zugangsberechtigungsinformation zum Zugang berechtigt. Verschiedene Ausgestaltungen der Zugangsberechtigungsinformation und deren Prüfung wurden bereits oben erläutert.

Falls in Schritt 1202 entschieden wird, dass Zugang gewährt werden darf, wird das Flussdiagramm 1200 mit Schritt 1203 fortgesetzt. Andernfalls endet das Flussdiagramm 1200.

In einem Schritt 1203 wird das Entriegeln der Tür 6 des Paketkastens 1 bewirkt. Zum Beispiel bewirkt der Prozessor 31 das Entriegeln der Tür 6. Zum Beispiel steuert Prozessor 31 in Schritt 1203 die Antriebsteuerung 35 derart an, dass der Antrieb 14 die Stange 13 in die erste Verstellposition dreht, so dass der Schließhaken 11 des ersten Verriegelungsmoduls 9 ein Riegelelement der Tür 6 freigibt und die Tür 6 geöffnet werden kann. Der Schritt 1202 entspricht beispielsweise dem oben beschriebenen Schritt 1103.

In einem Schritt 1204 wird geprüft, ob das Öffnen der Tür 6 erfasst wird. Zum Beispiel prüft der Prozessor 31 in Schritt 1204, ob einer der Sensoren 36 erfasst, ob die Tür 6 geöffnet wird. Zum Beispiel erfasst einer der oben beschriebenen Sensoren 36 (z.B. ein an einem Auswerfstößel 19 angeordneter Türöffnungssensor) das Öffnen der Tür 6 in Schritt 1204 und leitet eine entsprechende Information an den Prozessor 31 weiter. Wie oben beschrieben, werden die Türen 6, 7 des Paketkastens 1 automatisch geöffnet, wenn sie verriegelt sind. Es sind jedoch auch Ausgestaltungen denkbar, in denen die Türen 6, 7 nicht automatisch geöffnet werden oder in denen das automatische Öffnen der Türen 6, 7 des Paketkastens 1 blockiert ist.

Nach dem Öffnen der Tür wird beispielsweise die Stange 13 durch den Antrieb 14 aus der ersten Verstellposition wieder in die Schließposition gebracht, um die Fallenfunktion des Schnappverschlusses zu aktivieren. Zum Beispiel ist ist der Prozessor 31 eingerichtet, die Antriebssteuerung 35 entsprechend anzusteuern.

Wie oben beschrieben, ist das Öffnen einer Tür ein mit einer Benutzeraktivität assoziiertes Ereignis. Falls in Schritt 1204 ein Öffnen der Tür 6 erfasst wird, wird das Flussdiagramm 1200 mit den Schritten 1205 bis 1209 fortgesetzt, um gegebenenfalls ein Deaktivieren des Verriegelns der Tür 6 bewirken zu können. Andernfalls wird das Flussdiagramm 1200 mit den Schritten 1210 bis 1213 fortgesetzt, um die ungeöffnete Tür 6 gegebenenfalls wieder verriegeln zu können.

In einem Schritt 1205 wird das Messen der Benutzerinaktivitätszeit gestartet. Zum Beispiel startet der Prozessor 31 das Messen der Benutzerinaktivitätszeit und misst die Benutzerinaktivitätszeit (z.B. durch eine Timerfunktion und/oder eine Uhr).

In einem Schritt 1206 wird geprüft, ob ein neues mit einer Benutzeraktivität assoziiertes Ereignis erfasst wird. Zum Beispiel prüft der Prozessor 31 in Schritt 1206, ob einer der Sensoren 36, die Kommunikationsschnittstelle 34 und/oder Ein-/Ausgabeeinheit 37 ein neues mit einer Benutzeraktivität assoziiertes Ereignis erfassen.

Wie oben beschrieben, soll unter einem mit einer Benutzeraktivität assoziierten Ereignis beispielsweise jedes Ereignis verstanden werden, das durch einen Benutzer bewirkbar ist und/oder auf die Anweseneinheit eines Benutzers in der Umgebung des Paketkastens schließen lässt. Ein mit einer Benutzeraktivität assoziiertes Ereignis wird beispielsweise durch eine Benutzeraktivität ausgelöst und/oder ist eine Benutzeraktivität. Ein Beispiel für eine solche Benutzeraktivität ist zum Beispiel eine Präsenz eines Benutzer (z.B. eines Benutzers mit einer Zugangsberechtigungsnachweisvorrichtung) in der Umgebung der Zugangskontrollvorrichtung 30, das Erhalten von Information wie einer Zugangsberechtigungsinformation von einer Zugangsberechtigungsnachweisvorrichtung und/oder von einem Benutzer, die Interaktion mit einem Benutzer wie das Aufnehmen einer Eingabe des Benutzers an der Ein-/Ausgabeeinheit 37, das Öffnen der Tür 6 und/oder das Schließen der Tür 6.

Falls in Schritt 1206 kein neues mit einer Benutzeraktion assoziiertes Ereignis erfasst wird, wird das Flussdiagramm 1200 mit Schritt 1207 fortgesetzt. Andernfalls wird zum Beispiel das Messen der Benutzerinaktivitätszeit beendet und das Flussdiagramm 1200 springt zu Schritt 1205, in dem eine neues Messen der Benutzerinaktivitätszeit gestartet wird.

In einem Schritt 1207 wird geprüft, ob die gemessene Benutzerinaktivitätszeit größer als ein Benutzerinaktivitätszeitschwellwert ist. Zum Beispiel prüft der Prozessor 31, ob die gemessene Benutzerinaktivitätszeit größer als ein in Programmspeicher 32 gespeicherter Benutzerinaktivitätszeitschwellwert ist.

Falls die gemessene Benutzerinaktivitätszeit in Schritt 1207 größer als der Benutzerinaktivitätszeitschwellwert ist, wird zum Beispiel das Messen der Benutzerinaktivitätszeit beendet und das Flussdiagramm 1200 mit Schritt 1208 fortgesetzt. Andernfalls springt das Flussdiagramm 1200 zu Schritt 1206 und das Messen der Benutzerinaktivitätszeit wird fortgesetzt.

In einem Schritt 1208 wird geprüft, ob erfasst wird, dass die Tür 6 geöffnet ist. Zum Beispiel prüft der Prozessor 31 in Schritt 1208, ob einer der Sensoren 36 erfasst, ob die Tür 6 geöffnet ist. Zum Beispiel erfasst einer der oben beschriebenen Sensoren 36 (z.B. ein an einem Auswerfstößel 19 angeordneter Türöffnungssensor), ob die Tür 6 in Schritt 1208 geöffnet ist, und leitet eine entsprechende Information an den Prozessor 31 weiter.

Falls die Tür 6 in Schritt 1208 geöffnet ist (oder in Schritt 1208 erfasst wird, dass die Tür 6 geöffnet ist), wird das Flussdiagramm 1200 mit Schritt 1209 fortgesetzt. Andernfalls wird das Flussdiagramm 1200 beendet.

In Schritt 1209 wird das Deaktivieren des Verriegelns der Tür 6 bewirkt. Zum Beispiel wird die Deaktivierung der Fallenfunktion des Schnappverschlusses in Schritt 1209 bewirkt. Zum Beispiel bewirkt der Prozessor 31 das Deaktivieren des Verriegelns. Schritt 1209 entspricht beispielsweise Schritt 1103 des Flussdiagramms 1100. Anschließend endet das Flussdiagramm 1200.

Das Deaktivieren des Verriegelns der Tür 6 kann, wie oben beschrieben, beispielsweise rückgängig gemacht werden, wenn eine Zugangsberechtigungsinformation, die zum Zugang zum ersten Aufnahmefach des Paketkastens 1 berechtigt erhalten wird. Zum Beispiel ist der Prozessor 31 in diesem Fall eingerichtet, das Aktivieren des Verriegelns der Tür 6 zu bewirken. Das Verriegeln der Tür 6 ist beispielsweise aktiviert, wenn die Stange 13 aus der ersten Verstellposition durch den Antrieb 14 in die Schließposition gedreht wird. Zum Beispiel steuert der Prozessor 31 die Antriebssteuerung 35 entsprechend an.

Wie oben beschrieben, wird das Flussdiagramm nach Schritt 1204 mit den Schritten 1210 bis 1213 fortgesetzt, falls in Schritt 1204 kein Öffnen der Tür 6 erfasst wird, um die ungeöffnete Tür 6 gegebenenfalls wieder verriegeln zu können.

In einem Schritt 1210 wird das Messen der Entriegelungszeit gestartet. Zum Beispiel startet der Prozessor 31 das Messen der Entriegelungszeit und misst die Entriegelungszeit (z.B. durch eine Timerfunktion oder eine Uhr).

In einem Schritt 1211 wird erneut geprüft, ob das Öffnen der Tür 6 erfasst wird. Schritt 1211 entspricht beispielsweise Schritt 1204.

Falls in Schritt 1211 ein Öffnen der Tür 6 erfasst wird, wird zum Beispiel das Messen der Entriegelungszeit beendet und das Flussdiagramm 1200 springt zu Schritt 1205. Andernfalls wird das Flussdiagramm 1200 mit Schritt 1212 fortgesetzt.

In einem Schritt 1212 wird geprüft, ob die gemessene Entriegelungszeit größer als ein Entriegelungszeitschwellwert ist. Zum Beispiel prüft der Prozessor 31, ob die die gemessene Entriegelungszeit größer als ein in Programmspeicher 32 gespeicherter Entriegelungszeitschwellwert ist.

Falls die gemessene Zeit in Schritt 1212 größer als der Entriegelungszeitschwellwert ist, wird zum Beispiel das Messen der Entriegelungszeit beendet und das Flussdiagramm 1200 mit Schritt 1213 fortgesetzt. Andernfalls springt das Flussdiagramm 1200 zu Schritt 1211 und das Messen der Entriegelungszeit wird fortgesetzt.

In Schritt 1213 wird das Verriegeln der Tür 6 bewirkt. Zum Beispiel bewirkt der Prozessor 31 das Verriegeln der Tür 6. Anschließend endet das Flussdiagramm 1200.

Die Tür 6 wird beispielsweise verriegelt, wenn die Stange 13 durch den Antrieb 14 aus der ersten Verstellposition in die Schließposition gedreht wird. Denn in dieser Schließposition kann das Riegelelement der Tür 6 in die Hakenöffnung des Schließhakens 11 des Verriegelungsmoduls 9 eingreifen, um die Tür 6 zu Verriegeln. Zum Beispiel ist der Prozessor 31 eingerichtet, die Antriebssteuerung 35 entsprechend anzusteuern.

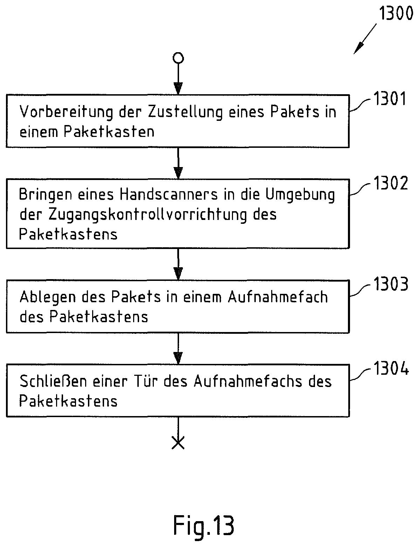

Fig. 13 ist ein Flussdiagramm 1300, das die Schritte eines Beispiels für eine erfindungsgemäße Verwendung darstellt. Die im Flussdiagramm 1300 dargestellten Schritte werden von einem Zusteller des Paketkastens 1 ausgeführt und im Folgenden aus dessen Perspektive beschrieben. In dem in Fig. 13 dargestellten Beispiel, möchte der Zusteller die Tür 6 des Paketkastens 1 öffnen, um ein Paket im ersten Aufnahmefach ablegen und somit zustellen zu können. Im diesem Beispiel wird davon ausgegangen, dass der Zusteller als Zugangsberechtigungsnachweisvorrichtung einen Handscanner (z.B. Honeywell's LXE Tecton MX7) verwendet.

In einem Schritt 1301 bereitet der Zusteller die Zustellung des Pakets in dem Paketkasten 1 vor.

Zum Beispiel scannt der Zusteller in Schritt 1301 einen auf dem Paket aufgebrachten Barcode mit dem Handscanner. Dadurch kann der Handscanner das Paket beispielsweise identifizieren und die dem Paket zugeordneten Sendungsinformationen abrufen. Die Sendungsinformationen enthalten beispielsweise Informationen über eine mögliche Zustellung des Pakets in einen Paketkasten des Empfängers. Zum Beispiel werden dem Zusteller ein oder mehrere Paketkästen, in die das Paket zugestellt werden darf, auf dem Handscanner angezeigt.

Zum Beispiel bestätigt der Zusteller in Schritt 1301 den Paketkasten 1, in dem er das Paket ablegen möchte, oder wählt den Paketkasten 1, in den er das Paket ablegen möchte, aus den angezeigten Paketkästen aus. Dadurch kann beispielsweise sichergestellt werden, dass der Zusteller das Paket auch in einem dem Paket oder dem Empfänger des Pakets zugeordneten Paketkasten ablegt und die Suche aus vielen Datensätzen wird vereinfacht. Ferner kann der Handscanner beispielsweise anhand des bestätigten oder ausgewählten Paketkastens 1 eine Zugangsberechtigungsinformation, die zum Zugang zum ersten Aufnahmefach des Paketkastens 1 berechtigt, abrufen oder erzeugen.

In einem Schritt 1302 bringt der Zusteller den Handscanner in die Umgebung der Zugangskontrollvorrichtung 30 des Paketkastens 1.

Zum Beispiel hält der Zusteller den Handscanner derart in die Umgebung der Zugangskontrollvorrichtung 30, dass der Handscanner von der Kommunikationsschnittstelle 34 detektierbar ist und mit der Kommunikationsschnittstelle 34 kommunizieren kann. Anschließend kommuniziert der Handscanner die Zugangsberechtigungsinformation beispielsweise an die Kommunikationsschnittstelle 34 (z.B. über Bluetooth, wobei zur Vermeidung des Bluetooth-Pairing die MAC-adresse der Zugangskontrollvorrichtung dem Handscanner bekannt gemacht wurde). Zum Beispiel wird die Tür 6 des Paketkastens 1 dann, wie oben beschrieben, entriegelt und geöffnet, wenn die Zugangsberechtigungsinformation zum Zugang zum ersten Aufnahmefach des Paketkastens 1 berechtigen. Der Zusteller erhält von dem Handscanner beispielsweise eine entsprechende Rückmeldung (z.B. wird eine Meldung angezeigt, dass Zugang gewährt wird).

Alleine dadurch, dass der Zusteller den Handscanner in die Umgebung der Zugangskontrollvorrichtung 30 des Paketkastens 1 bringt, kann er somit das Entriegeln sowie Öffnen der Tür 6 des Paketbriefkastens 1 veranlassen.

Das Öffnen der Tür 6 wird, wie oben beschrieben, beispielsweise erfasst und ein Messen der Benutzerinaktivitätszeit wird gestartet.

In einem Schritt 1303 legt der Zusteller das Paket in dem ersten Aufnahmefach des Paketkastens 1 ab.

In einem Schritt 1304 schließt der Zusteller die Tür 6 des ersten Aufnahmefachs des Paketkastens 1. Beispielsweise schließt der Zusteller die Tür 6, bevor die gemessene Benutzerinaktivitätszeit den Benutzerinaktivitätszeitschwellwert überschreitet. Wie oben beschrieben, wird die Tür 6 dadurch beispielsweise automatisch aufgrund einer Fallenfunktion des Schnappverschlusses verriegelt und das Bewirken des Deaktivieren des Verriegelns der Tür 6 wird verhindert.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablauf-diagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zum Deaktivieren des Verriegelns zumindest einer Tür (6, 7) einer Aufnahmevorrichtung (1), wobei die Aufnahmevorrichtung (1) Verrieglungsmittel (3) umfassen, die eingerichtet sind, die zumindest eine Tür (6, 7) zu verriegeln, wobei die Verriegelungsmittel (3) eine Falle umfassen, die eingerichtet ist, die zumindest eine Tür (6, 7) beim Schließen automatisch zu verriegeln, wobei das Verfahren umfasst:
- Bewirken (1101, 1203) des Entriegelns der zumindest einen Tür (6, 7),
- Erfassen (1204) des Öffnens der zumindest einen Tür (6, 7),
- Messen (1102) der Zeit seit zumindest ein von einer Zugangskontrollvorrichtung (30) der Aufnahmevorrichtung (1) erfasstes Ereignis stattgefunden hat, wobei das zumindest eine von der Zugangskontrollvorrichtung (30) erfasste Ereignis ein mit einer Benutzeraktivität assoziiertes Ereignis ist, wobei das zumindest eine von der Zugangskontrollvorrichtung (30) erfasste Ereignis das Detektieren einer Präsenz einer Zugangsberechtigungsnachweisvorrichtung in der Umgebung der Zugangskontrollvorrichtung, das Erhalten einer Zugangsberechtigungsinformation von einer Zugangsberechtigungsnachweisvorrichtung und/oder von einem Benutzer, das Aufnehmen einer Eingabe des Benutzers, das Bewirken des Entriegelns der Tür und/oder das Öffnen der Tür ist, und
- Bewirken (1103, 1209), wenn die zumindest eine Tür (6, 7) geöffnet ist und die gemessene Zeit einen vorgegebenen Zeitschwellwert überschreitet, des Deaktivierens des Verriegelns der zumindest einen Tür (6, 7) derart, dass die zumindest eine Tür (6, 7) nicht verriegelbar ist.

2. Verfahren nach Ansprüche 1, das Verfahren ferner umfassend:
- Erhalten (1201) von Zugangsberechtigungsinformation zum Gewähren eines Zugangs,
- Entscheiden (1202), ob Zugang gewährt werden darf, zumindest teilweise in Abhängigkeit der erhaltenen Zugangsberechtigungsinformation, und
- Bewirken (1203) des Entriegelns der zumindest einen Tür (6, 7) nur dann, wenn entschieden wurde, dass Zugang gewährt werden darf.

3. Verfahren nach einem der Ansprüche 1 und 2, das Verfahren ferner umfassend:
- Detektieren einer Präsenz einer Zugangsberechtigungsnachweisvorrichtung in einer Umgebung der Zugangskontrollvorrichtung (30).

4. Verfahren nach einem der Ansprüche 1 bis 3, das Verfahren ferner umfassend:
- Beenden des Messens der Zeit, wenn zumindest ein von der Zugangskontrollvorrichtung (30) erfasstes neues Ereignis stattgefunden hat, und
- Messen der Zeit seit das zumindest eine von der Zugangskontrollvorrichtung (30) erfasste neue Ereignis stattgefunden hat.

5. Verfahren nach einem der Ansprüche 1 bis 4, wobei der vorgegebene Zeitschwellwert kleiner als oder gleich 15 Minuten ist.

6. Verfahren nach einem der Ansprüche 1 bis 5, das Verfahren ferner umfassend:
- Messen der Entriegelungszeit seit dem Bewirken des Entriegelns der zumindest einen Tür (6, 7), und
- Bewirken (1213), wenn die zumindest eine Tür (6, 7) seit dem Bewirken des Entriegelns nicht geöffnet wurde und die gemessene Entriegelungszeit einen vorgegebenen Entriegelungszeitschwellwert überschreitet, des Verriegelns der zumindest einen Tür (6, 7).

7. Verfahren nach Anspruch 6, das Verfahren ferner umfassend:
- Bewirken des Wechselns der Zugangskontrollvorrichtung (30) in einen Energiesparmodus, wenn die gemessene Entriegelungszeit den Entriegelungzeitschwellwert überschreitet.

8. Verfahren nach einem der Ansprüche 1 bis 7, das Verfahren ferner umfassend:
- Öffnen der zumindest einen Tür (6, 7), und/oder
- Schließen der zumindest einen Tür (6, 7).

9. Computerprogramm, umfassend Programmanweisungen, die einen Prozessor (31) zur Ausführung des Verfahrens gemäß einem der Ansprüche 1 bis 7 veranlassen, wenn das Computerprogramm auf dem Prozessor läuft.

10. Zugangskontrollvorrichtung, umfassend:
- Mittel (31 - 37) eingerichtet zur Ausführung des Verfahrens nach Anspruch 1 oder einem der Ansprüche 4 bis 7, soweit diese nicht von Anspruch 2 oder 3 abhängen,-, wobei die Mittel (31-37) umfassen:
Steuermittel zum Bewirken (1101, 1203) des Entriegelns und zum Bewirken (1103, 1209) des Deaktivierens des Verriegelns,
Erfassungsmittel zum Erfassen (1204) des Öffnens,
Zeitmessmittel zum Messen (1102) der Zeit.

11. Zugangskontrollvorrichtung nach Anspruch 10, ferner umfassend:
- Mittel (31 - 37) eingerichtet zur Ausführung des Verfahrens nach einem der Ansprüche 2 und 3 oder nach einem der Ansprüche 4 bis 7, soweit diese von Anspruch 2 oder 3 abhängen, wobei die Mittel (31- 37) ferner umfassen:
Kommunikationsmittel zum Erhalten (1201) von Zugangsberechtigungsinformationen und/oder zum Detektieren einer Präsenz einer Zugangsberechtigungsnachweisvorrichtung.

12. Aufnahmevorrichtung (1), umfassend:
- ein Gehäuse (2),
- zumindest eine Tür (6, 7) zum Verschließen zumindest einer Gehäuseöffnung (4, 5),
- Verriegelungsmittel (3), die eingerichtet sind, die zumindest eine Tür (6, 7) zu verriegeln und zu entriegeln, wobei die Verriegelungsmittel (3) eine Falle umfassen, die eingerichtet ist, die zumindest eine Tür (6, 7) beim Schließen automatisch zu verriegeln, und
- eine Zugangskontrollvorrichtung (30) nach einem der Ansprüche 10 und 11.

13. Verwendung der Aufnahmevorrichtung (1) nach Anspruch 12 dergestalt, dass die zumindest eine Tür (6, 7) der Aufnahmevorrichtung (1) geschlossen wird, um das Bewirken des Deaktivierens des Verriegelns der zumindest einen Tür (6, 7) derart, dass die zumindest eine Tür (6, 7) nicht verriegelbar ist, zu verhindern.

## Claims

1. A method for deactivating locking of at least one door (6, 7) of a receiving apparatus (1), the receiving apparatus (1) comprising locking means (3) which are configured to lock the at least one door (6, 7), the locking means (3) comprising a latch which is configured to automatically lock the at least one door (6, 7) upon closing, the method comprising:
- causing (1101, 1203) unlocking of the at least one door (6, 7),
- capturing (1204) opening of the at least one door (6, 7),
- measuring (1102) the time since at least one event captured by an access control apparatus (30) of the receiving apparatus (1) took place, the at least one event captured by the access control apparatus (30) being an event associated with a user activity, the at least one event captured by the access control apparatus (30) is detecting a presence of an access authorization verification apparatus in an environment of the access control apparatus, obtaining access authorization information from an access authorization verification apparatus and/or from a user, recording of an input by the user, causing unlocking of the door and/or opening of the door, and
- if the at least one door (6, 7) is open and the measured time exceeds a predetermined time threshold value, causing (1103, 1209) deactivating of locking of the at least one door (6, 7) in such a manner that the at least one door (6, 7) is not lockable.

2. The method according to claim 1, the method further comprising:
- obtaining (1201) access authorization information for granting access,
- deciding (1202) whether access can be granted, at least partially on the basis of the access authorization information obtained, and
- causing (1203) unlocking of the at least one door (6, 7) only if it has been decided that access can be granted.

3. The method according to any of claims 1 and 2, the method further comprising:
- detecting a presence of an access authorization verification apparatus in an environment of the access control apparatus (30).

4. The method according to any of claims 1 to 3, the method further comprising:
- ending measuring of the time if at least one new event captured by the access control apparatus (30) has taken place, and
- measuring the time since the at least one new event captured by the access control apparatus (30) took place.

5. The method according to any of claims 1 to 4, the predetermined time threshold value being less than or equal to 15 minutes.

6. The method according to any of claims 1 to 5, the method further comprising:
- measuring the unlocking time since the causing of unlocking of the at least one door (6, 7), and
- if the at least one door (6, 7) has not been opened since the causing of unlocking and the measured unlocking time exceeds a predetermined unlocking time threshold value, causing (1213) locking of the at least one door (6, 7).

7. The method according to claim 6, the method further comprising:
- causing the access control apparatus (30) to switch to an energy-saving mode if the measured unlocking time exceeds the unlocking time threshold value.

8. The method according to any of claims 1 to 7, the method further comprising:
- opening the at least one door (6, 7) and/or
- closing the at least one door (6, 7).

9. A computer program comprising program instructions which cause a processor (31) to perform the method according to any of claims 1 to 7 when the computer program runs on the processor.

10. An access control apparatus comprising:
- means (31 - 37) configured to perform the method according to claim 1 or any of claims 4 to 7, as far as they are not depending on claim 2 or 3, the means (31 - 37) comprising:
control means for causing (1101, 1203) of unlocking and for causing (1103, 1209) deactivating of locking,
capture means for capturing (1204) opening,
time measure means for measuring (1102) the time.

11. The access control apparatus according to claim 10, further comprising:
- means (31 - 37) configured to perform the method according to any of claims 2 and 3 or according to any of claims 4 to 7, as far as they are depending on claim 2 or 3, the means (31 - 37) further comprising:
communication means for obtaining (1201) access authorization information and/or for detecting a presence of an access authorization verification apparatus.

12. A receiving apparatus (1) comprising:
- a housing (2),
- at least one door (6, 7) for closing at least one housing opening (4, 5),
- locking means (3) which are configured to lock and unlock the at least one door (6, 7), the locking means (3) comprising a latch which is configured to automatically lock the at least one door (6, 7) upon closing, and
- an access control apparatus (30) according to any of claims 10 and 11.

13. The use of the receiving apparatus (1) according to claim 12 in such a manner that the at least one door (6, 7) of the receiving apparatus (1) is closed in order to prevent the causing deactivating of locking of the at least one door (6, 7) in such a manner that the at least one door (6, 7) is not lockable.

## Revendications

1. Procédé pour désactiver le verrouillage d'au moins une porte (6, 7) d'un dispositif de réception (1), le dispositif de réception (1) comprenant des moyens de verrouillage (3) adaptés pour verrouiller l'au moins une porte (6, 7), les moyens de verrouillage (3) comprenant un loquet adapté pour verrouiller automatiquement l'au moins une porte (6, 7) lors de la fermeture, ledit procédé comprenant :
- entraîner (1101, 1203) le déverrouillage de l'au moins une porte (6, 7),
- détecter (1204) l'ouverture de l'au moins une porte (6, 7),
- mesurer (1102) le temps depuis qu'au moins un événement détecté par un dispositif de contrôle d'accès (30) du dispositif de réception (1) a eu lieu, l'au moins un événement détecté par le dispositif de contrôle d'accès (30) étant un événement associé à une activité d'utilisateur, l'au moins un événement détecté par le dispositif de contrôle d'accès (30) étant la détection d'une présence d'un dispositif de preuve de droit d'accès dans l'environnement du dispositif de contrôle d'accès, l'obtention d'une information de droit d'accès à partir d'un dispositif de preuve de droit d'accès et/ou d'un utilisateur, la réception d'une entrée de l'utilisateur, l'entraînement du déverrouillage de la porte et/ou l'ouverture de la porte, et
- entraîner (1103, 1209), lorsque l'au moins une porte (6, 7) est ouverte et que le temps mesuré dépasse une valeur de seuil de temps prédéterminée, la désactivation du verrouillage de l'au moins une porte (6, 7) de telle sorte que l'au moins une porte (6, 7) n'est pas verrouillable.

2. Procédé selon la revendication 1, le procédé comprenant en outre:
- Obtenir (1201) des informations de droit d'accès pour accorder un accès,
- décider (1202) si un accès peut être accordé, au moins en partie en fonction des informations de droit d'accès reçues, et
- entraîner (1203) le déverrouillage de l'au moins une porte (6, 7) uniquement lorsqu'il a été décidé qu'un accès peut être accordé.

3. Procédé selon l'une quelconque des revendications 1 et 2, le procédé comprenant en outre:
- détecter une présence d'un dispositif de preuve de droit d'accès dans un environnement du dispositif de contrôle d'accès (30).

4. Procédé selon l'une quelconque des revendications 1 à 3, le procédé comprenant en outre:
- arrêter la mesure du temps lorsqu'au moins un nouvel événement détecté par le dispositif de contrôle d'accès (30) a eu lieu, et
- mesurer le temps depuis que l'au moins un nouvel événement détecté par le dispositif de contrôle d'accès (30) a eu lieu.

5. Procédé selon l'une quelconque des revendications 1 à 4, dans lequel la valeur de seuil de temps prédéterminée est inférieure ou égal à 15 minutes.

6. Procédé selon l'une quelconque des revendications 1 à 5, le procédé comprenant en outre:
- mesurer le temps de déverrouillage depuis l'entraînement du déverrouillage de l'au moins une porte (6, 7), et
- entraîner (1213), si l'au moins une porte (6, 7) n'a pas été ouverte depuis l'entraînement du déverrouillage et le temps de déverrouillage mesuré dépasse une valeur de seuil de temps de déverrouillage prédéterminée, le verrouillage de l'au moins une porte (6, 7).

7. Procédé selon la revendication 6, le procédé comprenant en outre:
- entraîner le changement du dispositif de contrôle d'accès (30) vers un mode d'économie d'énergie lorsque le temps de déverrouillage mesuré dépasse la valeur de seuil de temps de déverrouillage.

8. Procédé selon l'une des revendications 1 à 7, le procédé comprenant en outre:
- ouvrir l'au moins une porte (6, 7), et/ou
- fermer l'au moins une porte (6, 7).

9. Programme informatique comprenant des instructions de programme qui amènent un processeur (31) à exécuter le procédé selon l'une des revendications 1 à 7 lorsque le programme informatique est exécuté sur le processeur.

10. Dispositif de contrôle d'accès, comprenant :
- des moyens (31-37) configurés pour mettre en oeuvre le procédé selon la revendication 1ou l'une des revendications 4 à 7, tant qu'elles ne dépendent pas de la revendication 2 ou 3,
- lesdits moyens (31-37) comprenant :
des moyens de commande pour entraîner (1101, 1203) le déverrouillage et pour entraîner (1103, 1209) la désactivation du verrouillage,
des moyens de détection pour détecter (1204) l'ouverture,
des moyens de mesure du temps pour mesurer (1102) le temps.

11. Dispositif de contrôle d'accès selon la revendication 10, comprenant en outre:
- des moyens (31-37) configurés pour mettre en oeuvre le procédé selon l'une des revendications 2 et 3 ou selon l'une des revendications 4 à 7, tant qu'elles dépendent de la revendication 2 ou 3, les moyens (31-37) comprenant en outre:
des moyens de communication pour obtenir (1201) des informations de droit d'accès et/ou pour détecter une présence d'un dispositif de preuve de droit d'accès.

12. Dispositif de réception (1), comprenant:
- un boîtier (2),
- au moins une porte (6, 7) pour fermer au moins une ouverture de boîtier (4, 5),
- des moyens de verrouillage (3) configurés pour verrouiller et déverrouiller l'au moins une porte (6, 7), les moyens de verrouillage (3) comprenant un loquet configuré pour verrouiller automatiquement l'au moins une porte (6, 7) lors de la fermeture, et
- un dispositif de contrôle d'accès (30) selon l'une des revendications 10 et 11.

13. Utilisation du dispositif de réception (1) selon la revendication 12, de telle sorte que l'au moins une porte (6, 7) du dispositif de réception (1) est fermée pour empêcher l'entraînement de la désactivation du verrouillage de l'au moins une porte (6, 7) de telle sorte que l'au moins une porte (6, 7) n'est pas verrouillable.
